# EUROPEAN PATENT APPLICATION

(11) **EP 4 535 743 A1**
(43) Date of publication of application: **09.04.2025**
(21) Application number: 23869701.5
(22) Date of filing: 05.06.2023
(51) Int. Cl.: H04L 41/0631

(54) **COMMUNICATION FAULT PROCESSING METHOD AND SYSTEM, AND DEVICE**

(30) Priority: 29.09.2022 CN 202211202680
(71) Applicant: xFusion Digital Technologies Co., Ltd., Zhengzhou, Henan 450046 (CN)
(72) Inventor: LIAN, Jin, Zhengzhou, Henan 450046 (CN)
(74) Representative: MERH-IP Matias Erny Reichl Hoffmann Patentanwälte PartG mbB
(86) International application number: PCT/CN2023/098348
(87) International publication number: WO 2024/066449

(57) **Abstract**

This application provides a communication fault handling method and system, and a device, and relates to the field of communication technologies. In this method, an out-of-band controller is connected to a network interface card, and a target network interface of the network interface card is configured to transmit a data packet between the out-of-band controller and an external network. The out-of-band controller actively obtains a target parameter that can indicate a status of communication between the out-of-band controller and the external network, to monitor whether the status of communication between the out-of-band controller and the external network is abnormal. If the target parameter indicates that the communication status is abnormal, the out-of-band controller actively sends a target command corresponding to the target parameter to the network interface card, and instructs the network interface card to execute the target command, to restore the communication status to normal. The out-of-band controller can actively monitor the communication status, and actively send, to the network interface card when the communication status is abnormal, the target command used to repair the communication status abnormality, so as to automatically restore the communication status to normal. In this way, there is no need to manually repair the communication status abnormality, which helps reduce manual costs and shorten a recovery period.

## Description

This application claims priority to Chinese Patent Application No. 202211202680.6, filed with the China National Intellectual Property Administration on September 29, 2022 and entitled "COMMUNICATION FAULT HANDLING METHOD AND SYSTEM, AND DEVICE", which is incorporated herein by reference in its entirety.

### TECHNICAL FIELD

This application relates to the field of communication technologies of computer devices, and in particular, to a communication fault handling method and system, and a device.

### BACKGROUND

With continuous upgrade of a network interface card, a network controller sideband interface (network controller sideband interface, NCSI) network interface card is proposed in a related technology. The NCSI network interface card may provide a network interface for both a central processing unit CPU and an out-of-band controller to communicate with an external network. In this way, the out-of-band controller can reuse the network interface card of the CPU, to implement communication with the external network, and no separate network interface card needs to be configured. However, if a firmware program of the NCSI network interface card undergoes an event such as restart, upgrade, downgrade, or configuration modification, network disconnection occurs in the out-of-band controller and cannot be automatically recovered.

Currently, when the out-of-band controller undergoes network disconnection, network reconfiguration between the NCSI network interface card and the out-of-band controller is usually manually performed. In this manner, manual costs are extremely high, and a recovery period is particularly long.

### SUMMARY

Embodiments of this application provide a communication fault handling method and system, and a device, to help reduce manual costs and shorten a recovery period.

To achieve the foregoing objective, the following technical solutions are used in the embodiments of this application:

According to a first aspect, a communication fault handling method is provided, and is used for a server. The server includes a network interface card and an out-of-band controller connected to the network interface card, and the method is executed by the out-of-band controller. The method includes: obtaining a target parameter of a target network interface of the network interface card, where the target network interface is configured to transmit a data packet between the out-of-band controller and an external network, and the target parameter is a parameter that indicates a status of communication between the out-of-band controller and the external network; and sending a target command corresponding to the target parameter to the network interface card if the target parameter indicates that the communication status is abnormal, where the target command is used to instruct the network interface card to execute the target command, to restore the communication status to normal.

In this solution, the out-of-band controller is connected to the network interface card, and the target network interface of the network interface card is configured to transmit a data packet between the out-of-band controller and the external network. The out-of-band controller actively obtains the target parameter that can indicate the status of communication between the out-of-band controller and the external network, to actively monitor whether the status of communication between the out-of-band controller and the external network is abnormal. If the target parameter indicates that the communication status is abnormal, the out-of-band controller sends the target command corresponding to the target parameter to the network interface card, and instructs the network interface card to execute the target command, to restore the communication status to normal. The out-of-band controller can actively monitor whether the communication status is abnormal, and actively send, to the network interface card when the communication status is abnormal, the target command used to repair the communication status abnormality, so as to automatically restore the communication status to normal. In this way, there is no need to manually repair the communication status abnormality between the out-of-band controller and the external network, which helps reduce manual costs and shorten a recovery period.

In addition, because the target command sent to the network interface card is triggered by the target parameter indicating that the communication status is abnormal, a degree of matching between the target command for repairing the communication status abnormality and the abnormality cause of the communication status abnormality is improved. In this way, repair reliability of the target command is improved, and a success rate of using the target command to repair the communication status abnormality is improved. In addition, in the solution in this application, there is no need to pay attention to a scenario in which the communication status is abnormal, that is, an abnormal communication status in a scenario in which a firmware program of the network interface card is restarted, the firmware program of the network interface card is upgraded, the firmware program of the network interface card is downgraded, configuration of the firmware program is modified, an NCSI parameter configuration is incorrect due to a command timing error, or the like can be restored by using the embodiment of this application. Therefore, the embodiment of this application has a wide application scenario. In addition, because the solution in this embodiment of this application does not depend on any command provided by a network interface card manufacturer, compatibility with a network interface card is also very good, and the solution is applicable to a network interface card provided by any manufacturer.

In a possible implementation, the target parameter includes a link status parameter of the target network interface. The method further includes: if a network controller sideband interface NCSI link status that is between the target network interface and the external network and that is indicated by the link status parameter is an abnormal state, determining that the link status parameter indicates that the communication status is abnormal.

In this implementation, the target parameter specifically includes the link status parameter of the target network interface, and the link status parameter is a parameter that indicates an NCSI link status between the target network interface and the external network. By determining that the communication status is abnormal when the NCSI link status indicated by the link status parameter is abnormal, it is determined that an abnormality cause of the communication status abnormality indicated by the link status parameter is an NCSI link status abnormality. Based on this, if the abnormality cause is used to determine the target command used to repair the communication status abnormality, a degree of matching between the target command used to repair the communication status abnormality and the abnormality cause is improved, thereby improving accuracy and reliability of using the target command to repair the communication status abnormality.

In another possible implementation, the out-of-band controller stores a correspondence between the link status parameter and a network interface card initialization command, and the sending a target command corresponding to the target parameter to the network interface card if the target parameter indicates that the communication status is abnormal includes: if the link status parameter indicates that the communication status is abnormal, sending the network interface card initialization command to the network interface card based on the correspondence, where the network interface card initialization command is used to instruct to set the NCSI link status to a predefined NCSI link state, and the predefined NCSI link state is a normal state.

In this implementation, the abnormality cause of the communication status abnormality indicated by the link status parameter is the NCSI link status abnormality, and the network interface card initialization command can instruct the network interface card to set the NCSI link status to the normal state. Therefore, the out-of-band controller pre-establishes the correspondence between a link status parameter and a network card initialization command, and sends the network interface card initialization command to the network interface card when the link status parameter indicates that the communication status is abnormal. This improves a degree of matching between the network interface card initialization command used to repair the communication status abnormality and the abnormality cause (that is, the NCSI link status abnormality) of the communication status abnormality. In this way, accuracy and reliability of using the network interface card initialization command to repair the communication status abnormality are ensured, thereby ensuring that the abnormality cause of the communication status abnormality is eliminated, and the communication status is restored to normal.

In another possible implementation, the network interface card initialization command includes at least one of a Select Package command, a Clear Initial State command, an Enable Channel command, a Disable Channel Network TX command, an Enable Channel Network TX command, an Enable Broadcast Filter command, a Disable Global Multicast Filter command, a Set VLAN Filter command, an Enable VLAN command, and a Disable VLAN command.

In another possible implementation, the target parameter includes NCSI parameter configuration information. The method further includes: if the target network interface is an NCSI transmit network interface, and the NCSI parameter configuration information indicates that an NCSI transmit function of the target network interface is not enabled, determining that the NCSI parameter configuration information indicates that the communication status is abnormal.

In this implementation, the target parameter includes the NCSI parameter configuration information, and the NCSI parameter configuration information indicates an enabling status of the NCSI transmit network interface. When the target network interface is the NCSI transmit network interface, the target network interface needs to send a data packet sent by the out-of-band controller to the external network. Therefore, if the target network interface is the NCSI transmit network interface, and the NCSI transmit function of the target network interface is not enabled, the target network interface cannot send, to the external network, the data packet sent by the out-of-band controller to the external network. It is determined that the communication status is abnormal when the target network interface is the NCSI transmit network interface and the NCSI parameter configuration information indicates that the NCSI transmit function of the target network interface is not enabled. Therefore, an abnormality cause of the communication status abnormality indicated by the NCSI parameter configuration information is determined as an NCSI transmit network interface parameter configuration abnormality (that is, when the target network interface is the NCSI transmit network interface, the NCSI transmit function is not enabled). Based on this, if the abnormality cause is used to determine the target command used to repair the communication status abnormality, a degree of matching between the target command used to repair the communication status abnormality and the abnormality cause is improved, thereby improving accuracy and reliability of using the target command to repair the communication status abnormality.

In another possible implementation, if the target network interface is the NCSI transmit network interface, the sending a target command corresponding to the target parameter to the network interface card if the target parameter indicates that the communication status is abnormal includes: if the NCSI parameter configuration information indicates that the communication status is abnormal, sending an Enable Channel command corresponding to the NCSI parameter configuration information to the network interface card, where the Enable Channel command is used to instruct to enable the NCSI transmit function of the target network interface, so as to enable the target network interface to send a data packet between the out-of-band controller and the external network.

In this implementation, the abnormality cause of the communication status abnormality indicated by the NCSI parameter configuration information is the NCSI transmit network interface parameter configuration abnormality, and the Enable Channel command can instruct the network interface card to enable the NCSI transmit function of the target network interface. Therefore, when it is determined that the NCSI parameter configuration information indicates that the communication status is abnormal, the Enable Channel command is sent to the network interface card. This improves a degree of matching between the Enable Channel command used to repair the communication status abnormality and the abnormality cause (that is, the NCSI transmit network interface parameter configuration abnormality) of the communication status abnormality. In this way, accuracy and reliability of using the Enable Channel command to repair the communication status abnormality are ensured, thereby ensuring that the abnormality cause of the communication status abnormality is eliminated, and the communication status is restored to normal.

In another possible implementation, the target parameter includes NCSI parameter configuration information. The method further includes: if the target network interface is an NCSI non-transmit network interface, and the NCSI parameter configuration information indicates that an NCSI transmit function of the target network interface is enabled, determining that the NCSI parameter configuration information indicates that the communication status is abnormal.

In this implementation, the target parameter includes the NCSI parameter configuration information, and the NCSI parameter configuration information indicates an enabling status of the NCSI non-transmit network interface. When the target network interface is the NCSI non-transmit network interface, the target network interface cannot send a data packet sent by the out-of-band controller to the external network. Therefore, if the target network interface is the NCSI non-transmit network interface, and the NCSI transmit function is enabled, the target network interface sends, to the external network, a data packet sent by the out-of-band controller to the external network, and the communication status is abnormal. It is determined that the communication status is abnormal when the target network interface is the NCSI non-transmit network interface and the NCSI parameter configuration information indicates that the NCSI transmit function of the target network interface is enabled. Therefore, an abnormality cause of the communication status abnormality indicated by the NCSI parameter configuration information is determined as an NCSI non-transmit network interface parameter configuration abnormality (that is, when the target network interface is the NCSI non-transmit network interface, the NCSI transmit function is enabled). Based on this, if the abnormality cause is used to determine the target command used to repair the communication status abnormality, a degree of matching between the target command used to repair the communication status abnormality and the abnormality cause is improved, thereby improving accuracy and reliability of using the target command to repair the communication status abnormality.

In another possible implementation, if the target network interface is the NCSI non-transmit network interface, the sending a target command corresponding to the target parameter to the network interface card if the target parameter indicates that the communication status is abnormal includes: if the NCSI parameter configuration information indicates that the communication status is abnormal, sending a Disable Channel command corresponding to the NCSI parameter configuration information to the network interface card, where the Disable Channel command is used to instruct to disable the NCSI transmit function of the target network interface, so as to prevent the target network interface from sending a data packet between the out-of-band controller and the external network.

In this implementation, the abnormality cause of the communication status abnormality indicated by the NCSI parameter configuration information is the NCSI non-transmit network interface parameter configuration abnormality, and the Disable Channel command can instruct the network interface card to disable the NCSI transmit function of the target network interface. Therefore, when it is determined that the NCSI parameter configuration information indicates that the communication status is abnormal, the Disable Channel command is sent to the network interface card. This improves a degree of matching between the Disable Channel command used to repair the communication status abnormality and the abnormality cause (that is, the NCSI non-transmit network interface parameter configuration abnormality) of the communication status abnormality. In this way, accuracy and reliability of using the Disable Channel command to repair the communication status abnormality are ensured, thereby ensuring that the abnormality cause of the communication status abnormality is eliminated, and the communication status is restored to normal.

In another possible implementation, the target parameter includes NCSI parameter configuration information, and the NCSI parameter configuration information indicates a media access control MAC address of the out-of-band controller that is recorded by the network interface card. The method further includes: if the MAC address is different from an actual MAC address of the out-of-band controller, determining that the NCSI parameter configuration information indicates that the communication status is abnormal.

In this implementation, the target parameter includes the NCSI parameter configuration information, and the NCSI parameter configuration information indicates the MAC address. When a data packet filtering function is enabled, the network interface card verifies a receive end address (that is, the actual MAC address of the out-of-band controller) recorded in a data packet. Therefore, if the MAC address recorded by the network interface card is different from the actual MAC address of the out-of-band controller, the receive end address recorded in the data packet is different from the MAC address recorded by the network interface card. In this case, the network interface card determines that the verification fails, filters out the data packet, and does not send the data packet to the out-of-band controller. It is determined that the communication status is abnormal when the MAC address and the MAC address are different. Therefore, an abnormality cause of the communication status abnormality indicated by the NCSI parameter configuration information is determined as a MAC address abnormality (that is, the MAC address of the out-of-band controller that is recorded by the network interface card is different from the actual MAC address of the out-of-band controller). Based on this, if the abnormality cause is used to determine the target command used to repair the communication status abnormality, a degree of matching between the target command used to repair the communication status abnormality and the abnormality cause is improved, thereby improving accuracy and reliability of using the target command to repair the communication status abnormality.

In another possible implementation, when the NCSI parameter configuration information indicates the MAC address, the sending a target command corresponding to the target parameter to the network interface card if the target parameter indicates that the communication status is abnormal includes: if the NCSI parameter configuration information indicates that the communication status is abnormal, sending a first configuration modification command corresponding to the NCSI parameter configuration information to the network interface card, where the first configuration modification command is used to instruct to modify the MAC address recorded by the network interface card to the actual MAC address of the out-of-band controller.

In this implementation, the abnormality cause of the communication status abnormality indicated by the NCSI parameter configuration information is the MAC address abnormality, and the first configuration modification command can instruct the network interface card to modify the MAC address of the out-of-band controller that is recorded by the network interface card to the actual MAC address of the out-of-band controller. Therefore, when it is determined that the NCSI parameter configuration information indicates that the communication status is abnormal, the first configuration modification command is sent to the network interface card. This improves a degree of matching between the first configuration modification command used to repair the communication status abnormality and the abnormality cause (that is, the MAC address abnormality) of the communication status abnormality. In this way, accuracy and reliability of using the first configuration modification command to repair the communication status abnormality are ensured, thereby ensuring that the abnormality cause of the communication status abnormality is eliminated, and the communication status is restored to normal.

In another possible implementation, the target parameter includes NCSI parameter configuration information, and the NCSI parameter configuration information indicates a virtual local area network VLAN identifier of the out-of-band controller that is recorded by the network interface. The method further includes: if the VLAN identifier is different from an actual VLAN identifier of the out-of-band controller, determining that the NCSI parameter configuration information indicates that the communication status is abnormal.

In this implementation, the target parameter includes the NCSI parameter configuration information, and the NCSI parameter configuration information indicates the VLAN identifier. When a data packet filtering function is enabled, the network interface card verifies a receive end VLAN identifier (that is, the actual VLAN identifier of the out-of-band controller) recorded in a data packet. Therefore, if the VLAN identifier recorded by the network interface card is different from the actual VLAN identifier of the out-of-band controller, the receive end VLAN identifier recorded in the data packet is different from the VLAN identifier recorded by the network interface card. In this case, the network interface card determines that the verification fails, filters out the data packet, and does not send the data packet to the out-of-band controller. It is determined that the communication status is abnormal when the VLAN identifier and the actual VLAN identifier of the out-of-band controller are different. Therefore, an abnormality cause of the communication status abnormality indicated by the NCSI parameter configuration information is determined as a VLAN identifier abnormality (that is, the VLAN identifier of the out-of-band controller that is recorded by the network interface card is different from the actual VLAN identifier of the out-of-band controller). Based on this, if the abnormality cause is used to determine the target command used to repair the communication status abnormality, a degree of matching between the target command used to repair the communication status abnormality and the abnormality cause is improved, thereby improving accuracy and reliability of using the target command to repair the communication status abnormality.

In another possible implementation, when the NCSI parameter configuration information indicates the VLAN identifier, the sending a target command corresponding to the target parameter to the network interface card if the target parameter indicates that the communication status is abnormal includes: if the NCSI parameter configuration information indicates that the communication status is abnormal, sending a second configuration modification command corresponding to the NCSI parameter configuration information to the network interface card, where the second configuration modification command is used to instruct to modify the VLAN identifier recorded by the network interface card to the actual VLAN identifier of the out-of-band controller.

In this implementation, the abnormality cause of the communication status abnormality indicated by the NCSI parameter configuration information is the VLAN identifier abnormality, and the second configuration modification command can instruct the network interface card to modify the VLAN identifier of the out-of-band controller that is recorded by the network interface card to the actual VLAN identifier of the out-of-band controller. Therefore, when it is determined that the NCSI parameter configuration information indicates that the communication status is abnormal, the second configuration modification command is sent to the network interface card. This improves a degree of matching between the second configuration modification command used to repair the communication status abnormality and the abnormality cause (that is, the VLAN identifier abnormality) of the communication status abnormality. In this way, accuracy and reliability of using the second configuration modification command to repair the communication status abnormality are ensured, thereby ensuring that the abnormality cause of the communication status abnormality is eliminated, and the communication status is restored to normal.

In another possible implementation, the out-of-band controller stores target link aggregation information between the network interface card and the external network, and the target link aggregation information indicates an NCSI transmit network interface identifier and an NCSI receive network interface identifier of the network interface card. The method further includes: when the communication status is restored to normal, sending a link aggregation command to the network interface card if a link aggregation function of the network interface card is enabled, and content indicated by current link aggregation information of the network interface card is different from content indicated by the target link aggregation information. The link aggregation command is used to instruct to set a network interface indicated by the NCSI transmit network interface identifier as an NCSI transmit network interface of the network interface card, and set a network interface indicated by the NCSI receive network interface identifier as an NCSI receive network interface of the network interface card, and the NCSI transmit network interface of the network interface card or the NCSI receive network interface of the network interface card is the target network interface.

In this implementation, the out-of-band controller stores the target link aggregation information between the network interface card and the external network. After the communication status is restored to normal, if the link aggregation function of the network interface card is enabled and the content indicated by the current link aggregation information of the network interface card is different from the content indicated by the target link aggregation information, the out-of-band controller sends the link aggregation command to the network interface card, so as to instruct the network interface card to set a link aggregation mode between the network interface card and the external network based on the target link aggregation information. In this way, when a target operation that causes the communication status abnormality on the network interface card side further causes a link aggregation mode change, the link aggregation mode may be restored to a mode before the communication status abnormality occurs.

In another possible implementation, the target parameter includes a link status parameter of the target network interface, the link status parameter is a parameter that indicates an NCSI link status between the out-of-band controller and the external network, and the out-of-band controller stores a correspondence between a link status parameter and a network interface card initialization command. The method further includes: if the link status parameter is not successfully obtained, determining that the link status parameter indicates that the communication status is abnormal; and sending a network interface card initialization command to the network interface card based on the correspondence. The network interface card initialization command is used to instruct to set the NCSI link status to a predefined NCSI link state, and the predefined NCSI link state is a normal state.

In this implementation, the target parameter includes the link status parameter of the target network interface, and the link status parameter is a parameter that indicates the NCSI link status between the target network interface and the external network. By determining that the communication status is abnormal when the NCSI link status indicated by the link status parameter is abnormal, it is determined that an abnormality cause of the communication status abnormality indicated by the link status parameter is an NCSI link status abnormality (that is, the link status parameter fails to be obtained). Based on this, the abnormality cause is used to determine the target command used to repair the communication status abnormality, the correspondence between a link status parameter and a network interface card initialization command is pre-established, and when it is determined that the link status parameter indicates that the communication status is abnormal, the network interface card initialization command is sent to the network interface card. This improves a degree of matching between the network interface card initialization command used to repair the communication status abnormality and the abnormality cause (that is, the NCSI link status abnormality) of the communication status abnormality. In this way, accuracy and reliability of using the network interface card initialization command to repair the communication status abnormality are ensured, thereby ensuring that the abnormality cause of the communication status abnormality is eliminated, and the communication status is restored to normal.

In another possible implementation, the obtaining a target parameter of a target network interface of the network interface card includes: determining that the network interface card supports the NCSI protocol, and obtaining the target parameter of the target network interface of the network interface card.

In this implementation, only a network interface of a network interface card that supports the NCSI protocol can transmit a data packet between the out-of-band controller and the external network. Therefore, after it is determined that the network interface card supports the NCSI protocol, it can be ensured that the obtained target parameter indicates a status of communication between the out-of-band controller and the external network. In this way, it is ensured that the out-of-band controller can accurately monitor a status of communication between the out-of-band controller and the external network, and when the target parameter indicates that the communication status is abnormal, the communication status is restored to normal in a timely manner.

In another possible implementation, the out-of-band controller stores a first mapping relationship between four-tuple information of a network interface card and the NCSI protocol. The method further includes: obtaining four-tuple information of the network interface card, and determining, based on the four-tuple information of the network interface card and the first mapping relationship, that the network interface card supports the NCSI protocol.

In this implementation, a specific implementation of determining that the network interface card supports the NCSI protocol is provided. The first mapping relationship between four-tuple information of a network interface card and the NCSI protocol is pre-stored, and the four-tuple information of the network interface card is obtained, so that it is determined, based on the four-tuple information of the network interface card and the first mapping relationship, that the network interface card supports the NCSI protocol. This operation is simple, convenient, and of low difficulty.

In another possible implementation, the out-of-band controller stores a second mapping relationship between a code of a network interface card and the NCSI protocol. The method further includes: obtaining a code of the network interface card, and determining, based on the code of the network interface card and the second mapping relationship, that the network interface card supports the NCSI protocol.

In this implementation, a specific implementation of determining that the network interface card supports the NCSI protocol is provided. The second mapping relationship between a code of a network interface card and the NCSI protocol is pre-stored, and the code of the network interface card is obtained, so that it is determined, based on the code of the network interface card and the first mapping relationship, that the network interface card supports the NCSI protocol. This operation is simple, convenient, and of low difficulty.

In another possible implementation, the obtaining a target parameter of a target network interface of the network interface card includes: obtaining the target parameter of the target network interface of the network interface card based on a preset periodicity.

In this implementation, the out-of-band controller obtains the target parameter of the target network interface of the network interface card based on the preset periodicity, so as to monitor the status of communication between the out-of-band controller and the external network based on the preset periodicity. In this way, by adjusting the duration of the preset periodicity, a frequency of obtaining the target parameter can be controlled, which helps improve timeliness of monitoring the communication status, and further helps detect a communication status abnormality in a timely manner, repair the communication status abnormality in a timely manner when the communication status is abnormal, and shorten a recovery period.

In another possible implementation, the obtaining a target parameter of a target network interface of the network interface card includes: receiving target information sent by the network interface card, where the target information is used to instruct to determine the status of communication between the out-of-band controller and the external network, and obtaining the target parameter of the target network interface of the network interface card in response to the target information.

In this implementation, after receiving the target information that is sent by the network interface card and that indicates to determine the communication status, the out-of-band controller obtains the target parameter of the target network interface of the network interface card in response to the target information. In this way, the out-of-band controller does not need to frequently obtain the target parameter to ensure timely discovery of a communication status abnormality, which helps save operation resources of the out-of-band controller.

According to a second aspect, a communication fault handling method is provided, and is used for a server. The server includes a network interface card and an out-of-band controller connected to the network interface card, and the method is executed by the network interface card. The method includes: receiving a target command that is sent by the out-of-band controller and corresponding to a target parameter of a target network interface of the network interface card, where the target network interface is configured to transmit a data packet between the out-of-band controller and an external network, the target parameter is a parameter indicating a status of communication between the out-of-band controller and the external network, and the target command is sent when the out-of-band controller determines, based on the target parameter of the target network interface, that the status of communication between the out-of-band controller and the external network is abnormal; and executing the target command to restore the communication status to normal.

In this solution, the network interface card is connected to the out-of-band controller, the target network interface of the network interface card is used to transmit a data packet between the out-of-band controller and the external network, and the target parameter of the target network interface is a parameter indicating a status of communication between the out-of-band controller and the external network. The out-of-band controller monitors the target parameter to monitor whether the status of communication between the out-of-band controller and the external network is abnormal. When the status of communication between the out-of-band controller and the external network is abnormal, the network interface card receives the target command corresponding to the target parameter that is sent by the out-of-band controller, and executes the target command, to restore the status of communication between the out-of-band controller and the external network to normal. The out-of-band controller can actively monitor whether the communication status is abnormal, and actively send, to the network interface card when the communication status is abnormal, the target command used to repair the communication status abnormality, so as to automatically restore the communication status to normal. In this way, there is no need to manually repair the communication status abnormality between the out-of-band controller and the external network, which helps reduce manual costs and shorten a recovery period.

In addition, because the target command sent to the network interface card is triggered by the target parameter indicating that the communication status is abnormal, a degree of matching between the target command for repairing the communication status abnormality and the abnormality cause of the communication status abnormality is improved. In this way, repair reliability of the target command is improved, and a success rate of using the target command to repair the communication status abnormality is improved. In addition, in the solution in this application, there is no need to pay attention to a scenario in which the communication status is abnormal, that is, an abnormal communication status in a scenario in which a firmware program of the network interface card is restarted, the firmware program of the network interface card is upgraded, the firmware program of the network interface card is downgraded, configuration of the firmware program is modified, an NCSI parameter configuration is incorrect due to a command timing error, or the like can be restored by using the embodiment of this application. Therefore, the embodiment of this application has a wide application scenario. In addition, because the solution in this embodiment of this application does not depend on any command provided by a network interface card manufacturer, compatibility with a network interface card is also very good, and the solution is applicable to a network interface card provided by any manufacturer.

In a possible implementation, the target parameter includes a link status parameter, and the target command includes a network interface card initialization command. The network interface card initialization command is used to instruct to set the NCSI link status to a predefined NCSI link state, and the predefined NCSI link state is normal.

In another possible implementation, the target parameter includes NCSI parameter configuration information. If the target network interface is an NCSI transmit network interface, the target command includes an Enable Channel command, where the Enable Channel command is used to instruct to enable an NCSI transmit function of the target network interface, so as to enable the target network interface to transmit a data packet between the out-of-band controller and the external network.

In another possible implementation, the target parameter includes NCSI parameter configuration information. If the target network interface is an NCSI non-transmit network interface, the target command includes a Disable Channel command, where the Disable Channel command is used to instruct to disable an NCSI transmit function of the target network interface, so as to prevent the target network interface from transmitting a data packet between the out-of-band controller and the external network.

In another possible implementation, the target parameter includes NCSI parameter configuration information, the NCSI parameter configuration information includes a MAC address of the out-of-band controller that is recorded by the network interface card, and the target command includes a first configuration modification command, where the first configuration modification command is used to instruct to modify the MAC address of the out-of-band controller that is recorded by the network interface card to an actual MAC address of the out-of-band controller.

In another possible implementation, the target parameter includes NCSI parameter configuration information, the NCSI parameter configuration information further includes a virtual local area network VLAN identifier of the out-of-band controller that is recorded by the network interface card, and the target command includes a second configuration modification command, where the second configuration modification command is used to instruct to modify the virtual local area network VLAN identifier of the out-of-band controller that is recorded by the network interface card to an actual VLAN identifier of the out-of-band controller.

In another possible implementation, the method further includes: sending target information to the out-of-band controller in response to a performed target operation that has taken effect, where the target information is used to instruct to determine the status of communication between the out-of-band controller and the external network, and the target operation includes any one of restarting a firmware program of the network interface card, upgrading the firmware program of the network interface card, downgrading the firmware program of the network interface card, and modifying a configuration of the firmware program of the network interface card.

In this implementation, after an operation such as restart, upgrade, downgrade, and configuration modification of the firmware program of the network interface card takes effect, the status of communication between the out-of-band controller and the external network is usually abnormal. Therefore, after the target operation takes effect, the network interface card actively sends the target information to the out-of-band controller to instruct the out-of-band controller to determine the communication status. In this way, the out-of-band controller can discover the communication status abnormality in a timely manner, and in addition, there is no need to frequently obtain the target parameter to ensure timely discovery of the communication status abnormality, and this helps save operation resources of the out-of-band controller.

According to a third aspect, a communication fault handling apparatus is provided. The apparatus includes functional units configured to perform any method provided in the first aspect, where actions performed by the functional units are implemented by using hardware or by executing corresponding software by hardware. For example, the communication fault handling apparatus may include an obtaining unit and a sending unit. The obtaining unit is configured to obtain a target parameter of a target network interface of a network interface card. The target network interface is configured to transmit a data packet between an out-of-band controller and an external network. The target parameter is a parameter that indicates a status of communication between the out-of-band controller and the external network. The sending unit is configured to: if the target parameter indicates that the communication status is abnormal, send a target command corresponding to the target parameter to the network interface card. The target command is used to instruct the network interface card to execute the target command, to restore the communication status to normal.

According to a fourth aspect, a communication fault handling apparatus is provided. The apparatus includes functional units configured to perform any method provided in the second aspect, where actions performed by the functional units are implemented by using hardware or by executing corresponding software by hardware. For example, the communication fault handling apparatus may include a receiving unit and an execution unit. The receiving unit is configured to receive a target command that is sent by an out-of-band controller and corresponding to a target parameter of a target network interface of a network interface card, where the target network interface is configured to transmit a data packet between the out-of-band controller and an external network, the target parameter is a parameter indicating a status of communication between the out-of-band controller and the external network, and the target command is sent when the out-of-band controller determines, based on the target parameter of the target network interface, that the status of communication between the out-of-band controller and the external network is abnormal. The execution unit is configured to execute the target command to restore the communication status to normal.

According to a fifth aspect, a communication fault handling system is provided, including a network interface card and an out-of-band controller connected to the network interface card. A target network interface of the network interface card is configured to transmit a data packet between the out-of-band controller and an external network. The out-of-band controller is configured to execute any method provided in the first aspect, and the network interface card is configured to execute any method provided in the second aspect.

According to a sixth aspect, a communication fault handling system is provided, including a network interface card and an out-of-band controller connected to the network interface card. A target network interface of the network interface card is configured to transmit a data packet between the out-of-band controller and an external network. The out-of-band controller is configured to obtain a target parameter of the target network interface of the network interface card. The target network interface is configured to transmit a data packet between the out-of-band controller and the external network. The target parameter is a parameter that indicates a status of communication between the out-of-band controller and the external network. The out-of-band controller is further configured to: if the target parameter indicates that the communication status is abnormal, send a target command corresponding to the target parameter to the network interface card. The target command is used to instruct the network interface card to execute the target command, to restore the communication status to normal. The network interface card is configured to receive the target command corresponding to the target parameter of the target network interface of the network interface card that is sent by the out-of-band controller. The network interface card is further configured to execute the target command to restore the communication status to normal.

In a possible implementation, the target parameter includes a link status parameter of the target network interface. The out-of-band controller is further configured to: if a network controller sideband interface NCSI link status that is between the target network interface and the external network and that is indicated by the link status parameter is an abnormal state, determine that the link status parameter indicates that the communication status is abnormal.

In another possible implementation, the out-of-band controller stores a correspondence between a link status parameter and a network interface card initialization command. The out-of-band controller is specifically configured to: if the link status parameter indicates that the communication status is abnormal, send the network interface card initialization command to the network interface card based on the correspondence. The network interface card initialization command is used to instruct to set the NCSI link status to a predefined NCSI link state, and the predefined NCSI link state is a normal state. The network interface card is specifically configured to: receive the network interface card initialization command sent by the out-of-band controller, and execute the network interface card initialization command, to restore the NCSI link status indicated by the link status parameter to a normal state.

In another possible implementation, the network interface card initialization command includes at least one of a Select Package command, a Clear Initial State command, an Enable Channel command, a Disable Channel Network TX command, an Enable Channel Network TX command, an Enable Broadcast Filter command, a Disable Global Multicast Filter command, a Set VLAN Filter command, an Enable VLAN command, and a Disable VLAN command.

In another possible implementation, the target parameter includes NCSI parameter configuration information. The out-of-band controller is further configured to: if the target network interface is an NCSI transmit network interface, and the NCSI parameter configuration information indicates that an NCSI transmit function of the target network interface is not enabled, determine that the NCSI parameter configuration information indicates that the communication status is abnormal.

In another possible implementation, if the target network interface is the NCSI transmit network interface, the out-of-band controller is specifically configured to: if the NCSI parameter configuration information indicates that the communication status is abnormal, send an Enable Channel command corresponding to the NCSI parameter configuration information to the network interface card, where the Enable Channel command is used to instruct to enable the NCSI transmit function of the target network interface, so as to enable the target network interface to send a data packet between the out-of-band controller and the external network. The network interface card is specifically configured to: receive the Enable Channel command corresponding to the NCSI parameter configuration information that is sent by the out-of-band controller, and execute the Enable Channel command, to enable the target network interface to send the data packet between the out-of-band controller and the external network.

In another possible implementation, the target parameter includes NCSI parameter configuration information. The out-of-band controller is further configured to: if the target network interface is an NCSI non-transmit network interface, and the NCSI parameter configuration information indicates that an NCSI transmit function of the target network interface is enabled, determine that the NCSI parameter configuration information indicates that the communication status is abnormal.

In another possible implementation, if the target network interface is an NCSI non-transmit network interface, the out-of-band controller is specifically configured to: if the NCSI parameter configuration information indicates that the communication status is abnormal, send a Disable Channel command corresponding to the NCSI parameter configuration information to the network interface card, where the Disable Channel command is used to instruct to disable the NCSI transmit function of the target network interface, so as to prevent the target network interface from sending a data packet between the out-of-band controller and the external network. The network interface card is specifically configured to: receive the Disable Channel command sent by the out-of-band controller, and execute the Disable Channel command, so as to prevent the target network interface from sending the data packet between the out-of-band controller and the external network.

In another possible implementation, the target parameter includes NCSI parameter configuration information, and the NCSI parameter configuration information indicates a media access control MAC address of the out-of-band controller that is recorded by the network interface card. The out-of-band controller is further configured to: if the MAC address is different from an actual MAC address of the out-of-band controller, determine that the NCSI parameter configuration information indicates that the communication status is abnormal.

In another possible implementation, when the NCSI parameter configuration information indicates the MAC address of the out-of-band controller that is recorded by the network interface card, the out-of-band controller is specifically configured to: if the NCSI parameter configuration information indicates that the communication status is abnormal, send a first configuration modification command corresponding to the NCSI parameter configuration information to the network interface card, where the first configuration modification command is used to instruct to modify the MAC address of the out-of-band controller that is recorded by the network interface card to the actual MAC address of the out-of-band controller. The network interface card is specifically configured to: receive the first configuration modification command corresponding to the NCSI parameter configuration information that is sent by the out-of-band controller, and execute the first configuration modification command, to modify the MAC address of the out-of-band controller that is recorded by the network interface card to the actual MAC address of the out-of-band controller.

In another possible implementation, the target parameter includes NCSI parameter configuration information, and the NCSI parameter configuration information indicates a virtual local area network VLAN identifier of the out-of-band controller that is recorded by the network interface card. The out-of-band controller is further configured to: if the VLAN identifier is different from an actual VLAN identifier of the out-of-band controller, determine that the NCSI parameter configuration information indicates that the communication status is abnormal.

In another possible implementation, when the NCSI parameter configuration information indicates the VLAN identifier of the out-of-band controller that is recorded by the network interface card, the out-of-band controller is specifically configured to: if the NCSI parameter configuration information indicates that the communication status is abnormal, send a second configuration modification command corresponding to the NCSI parameter configuration information to the network interface card, where the second configuration modification command is used to instruct to modify the VLAN identifier of the out-of-band controller that is recorded by the network interface card to the actual VLAN identifier of the out-of-band controller. The network interface card is specifically configured to: receive the second configuration modification command corresponding to the NCSI parameter configuration information that is sent by the out-of-band controller, and execute the second configuration modification command, to modify the VLAN identifier of the out-of-band controller that is recorded by the network interface card to the actual VLAN identifier of the out-of-band controller.

In another possible implementation, the out-of-band controller stores target link aggregation information between the network interface card and the external network, and the target link aggregation information indicates an NCSI transmit network interface identifier and an NCSI receive network interface identifier of the network interface card. The out-of-band controller is further configured to: when the communication status is restored to normal, send a link aggregation command to the network interface card if a link aggregation function of the network interface card is enabled, and content indicated by current link aggregation information of the network interface card is different from content indicated by the target link aggregation information. The link aggregation command is used to instruct to set a network interface indicated by the NCSI transmit network interface identifier as an NCSI transmit network interface of the network interface card, and set a network interface indicated by the NCSI receive network interface identifier as an NCSI receive network interface of the network interface card, and the NCSI transmit network interface of the network interface card or the NCSI receive network interface of the network interface card is the target network interface. The network interface card is further configured to: receive the link aggregation command sent by the out-of-band controller, and execute the link aggregation command, to set the network interface indicated by the NCSI transmit network interface identifier as the NCSI transmit network interface of the network interface card, and set the network interface indicated by the NCSI receive network interface identifier as the NCSI receive network interface of the network interface card.

In another possible implementation, the out-of-band controller stores a correspondence between a link status parameter and a network interface card initialization command. The out-of-band controller is further configured to: if the link status parameter is not successfully obtained, determine that the link status parameter indicates that the communication status is abnormal; and send a network interface card initialization command to the network interface card based on the correspondence. The network interface card initialization command is used to instruct to set the NCSI link status to a predefined NCSI link state, and the predefined NCSI link state is a normal state. The network interface card is further configured to: receive the network interface initialization command sent by the out-of-band controller, and execute the network interface card initialization command, so that the NCSI link status indicated by the link status parameter is a normal state.

In another possible implementation, the out-of-band controller is specifically configured to obtain the target parameter of the target network interface of the network interface card if the network interface card supports the NCSI protocol.

In another possible implementation, the out-of-band controller stores a first mapping relationship between four-tuple information of a network interface card and the NCSI protocol. The out-of-band controller is further configured to: obtain four-tuple information of the network interface card, and determine, based on the four-tuple information of the network interface card and the first mapping relationship, that the network interface card supports the NCSI protocol.

In another possible implementation, the out-of-band controller stores a second mapping relationship between a code of a network interface card and the NCSI protocol. The out-of-band controller is further configured to: obtain a code of the network interface card, and determine, based on the code of the network interface card and the second mapping relationship, that the network interface card supports the NCSI protocol.

In another possible implementation, the out-of-band controller is specifically configured to obtain the target parameter of the target network interface of the network interface card based on a preset periodicity.

In another possible implementation, the network interface card is further configured to send target information to the out-of-band controller in response to a performed target operation that has taken effect, where the target information is used to instruct to determine the status of communication between the out-of-band controller and the external network, and the target operation includes any one of restarting a firmware program of the network interface card, upgrading the firmware program of the network interface card, downgrading the firmware program of the network interface card, and modifying a configuration of the firmware program of the network interface card. The out-of-band controller is further configured to: receive the target information sent by the network interface card, and obtain the target parameter of the target network interface of the network interface card in response to the target information.

According to a seventh aspect, a computer device is provided, including a processor and a memory, where the processor is connected to the memory. The memory is configured to store computer executable instructions, and the processor executes the computer executable instructions stored in the memory, to implement any method provided in the first aspect or implement any method provided in the second aspect.

According to an eighth aspect, a chip is provided, where the chip includes a processor and an interface circuit. The interface circuit is configured to receive a code instruction and transmit the code instruction to the processor. The processor is configured to run the code instruction to execute any method provided in the first aspect or execute any method provided in the second aspect.

According to a ninth aspect, a computer-readable storage medium is provided, storing computer executable instructions. When the computer executable instructions are run on a computer, the computer is enabled to execute any method provided in the first aspect or execute any method provided in the second aspect.

According to a tenth aspect, a computer program product is provided, including computer executable instructions. When the computer executable instructions are run on a computer, the computer is enabled to execute any method provided in the first aspect or execute any method provided in the second aspect.

For technical effects brought by any implementation of the second aspect to the tenth aspect, refer to technical effects brought by different implementations of the first aspect. Details are not described herein again.

### BRIEF DESCRIPTION OF DRAWINGS

FIG. 1 is a diagram of an architecture of a computer device according to an embodiment of this application;
FIG. 2 is a diagram of a communication principle of a network interface card according to an embodiment of this application;
FIG. 3 is a flowchart of a communication fault handling method according to an embodiment of this application;
FIG. 4 is a flowchart of another communication fault handling method according to an embodiment of this application;
FIG. 5 is a flowchart of another communication fault handling method according to an embodiment of this application;
FIG. 6 is a flowchart of another communication fault handling method according to an embodiment of this application;
FIG. 7 is a flowchart of another communication fault handling method according to an embodiment of this application;
FIG. 8 is a flowchart of another communication fault handling method according to an embodiment of this application;
FIG. 9 is a schematic diagram of a communication fault handling apparatus according to an embodiment of this application; and
FIG. 10 is a schematic diagram of another communication fault handling apparatus according to an embodiment of this application.

### DESCRIPTION OF EMBODIMENTS

The following describes the technical solutions in embodiments of this application with reference to the accompanying drawings in embodiments of this application.

In the descriptions of this application, unless otherwise stated, "/" represents an "or" relationship between associated objects, for example, A/B may represent A or B. In this application, "and/or" merely describes an association relationship between associated objects, and represents that three relationships may exist. For example, A and/or B may represent that A exists alone, both A and B exist, and B exists alone, where A and B may be singular or plural.

In addition, in the descriptions of this application, unless otherwise stated, "a plurality of" means two or more. "At least one of the following items" or a similar expression thereof means any combination of these items, including any combination of a single item or a plurality of items. For example, at least one of a, b, or c may represent a, b, c, a and b, a and c, b and c, or a, b, and c, where a, b, and c may be singular or plural.

In addition, to clearly describe the technical solutions in the embodiments of this application, in the embodiments of this application, terms such as "first" and "second" are used to distinguish between same items or similar items that have basically the same functions or purposes. A person skilled in the art may understand that terms such as "first" and "second" do not limit a quantity or an execution sequence, and terms such as "first" and "second" do not mean being definitely different. In addition, in the embodiments of this application, words such as "example" or "for example" are used to represent examples, illustrations, or descriptions. Any embodiment or design solution described as "example" or "for example" in the embodiments of this application should not be construed as being more preferred or advantageous than other embodiments or design solutions. Exactly, use of the words such as "example" or "for example" is intended to present relevant concepts in a specific manner for ease of understanding.

The following briefly describes terms involved in embodiments of this application.

A network controller sideband interface (network controller sideband interface, NCSI) is an electrical interface and a protocol that are defined by the distributed management task force (distributed management task force, DMTF). The NCSI protocol allows an out-of-band controller to be connected to one or more network interface cards (network interface card, NIS) in a computer device, which are referred to as NICs for short, to implement management of the out-of-band controller. In addition to normal communication, the network interface card further allows the out-of-band controller to use a network interface of the network interface card to perform communication.

Link aggregation control protocol (link aggregation control protocol, LACP) provides a method for controlling a plurality of physical links to be bundled together to form a single logical link. LACP allows the network interface card to negotiate about automatic binding of links by sending an LACP packet to a peer device (a directly-connected device that also implements LACP).

A reduced media independent interface (reduced media independent interface, RMII) is a standard designed to reduce a quantity of signals required to connect a physical layer (physical layer, PHY) to a media access controller (media access control, MAC).

Peripheral component interconnect express (peripheral component interconnect express, PCIE) belongs to high-speed serial point-to-point dual-channel high-bandwidth transmission. Connected devices are provided with dedicated channel bandwidths, and do not share a bus bandwidth.

The following describes an application scenario of embodiments of this application with examples.

To ensure stable running of a computer device, the computer device is configured with an out-of-band controller responsible for functions such as hardware status management, operating system management, health status management, and power consumption management of the computer device. To implement these functions, the out-of-band controller monitors a status of each component of the computer device, that is, obtains status data of each component, and monitors a change of the status data to monitor the status of the component.

A user may manage monitoring data in the out-of-band controller in a local area network, or may remotely manage monitoring data in the out-of-band controller by using an external network, for example, remotely monitor the monitoring data in the out-of-band controller by using a remote management console.

When the user uses the external network to remotely manage the out-of-band controller, a communication connection between the out-of-band controller and the external network needs to be established, and is usually implemented by using a network interface card that can communicate with the external network. In specific implementation, the out-of-band controller is connected to the network interface card, and a network interface of the network interface card is connected to the external network, so as to implement data packet transmission between the out-of-band controller and the external network.

With continuous upgrade of a network interface card, a network controller sideband interface (network controller sideband interface, NCSI) network interface card is proposed in a related technology. The NCSI network interface card may provide a network interface for both a central processing unit CPU and an out-of-band controller to communicate with an external network. In this way, the out-of-band controller can reuse the network interface card of the CPU, to implement communication with the external network, and no separate network interface card needs to be configured.

However, if a firmware program of the NCSI network interface card undergoes an event such as restart, upgrade, downgrade, or configuration modification, and the operation such as the upgrade, downgrade, or configuration modification takes effect, a communication fault (such as network disconnection) occurs in the out-of-band controller and cannot be automatically recovered. To restore communication between the out-of-band controller and the external network, network reconfiguration between the NCSI network interface card and the out-of-band controller is usually manually performed. In this manner, manual costs are extremely high, and a recovery period is particularly long.

In view of this, embodiments of this application provide a communication fault handling method. An out-of-band controller is connected to a network interface card, and a target network interface of the network interface card is configured to transmit a data packet between the out-of-band controller and an external network. The out-of-band controller actively obtains a target parameter that can indicate a status of communication between the out-of-band controller and the external network, to actively monitor whether the status of communication between the out-of-band controller and the external network is abnormal. If the target parameter indicates that the communication status is abnormal, the out-of-band controller sends a target command corresponding to the target parameter to the network interface card, and instructs the network interface card to execute the target command, to restore the communication status to normal. The out-of-band controller can actively monitor whether the communication status is abnormal, and actively send, to the network interface card when the communication status is abnormal, the target command used to repair the communication status abnormality, so as to automatically restore the communication status to normal. In this way, there is no need to manually repair the communication status abnormality between the out-of-band controller and the external network, which helps reduce manual costs and shorten a recovery period.

Next, an example of a system architecture in embodiments of this application is described.

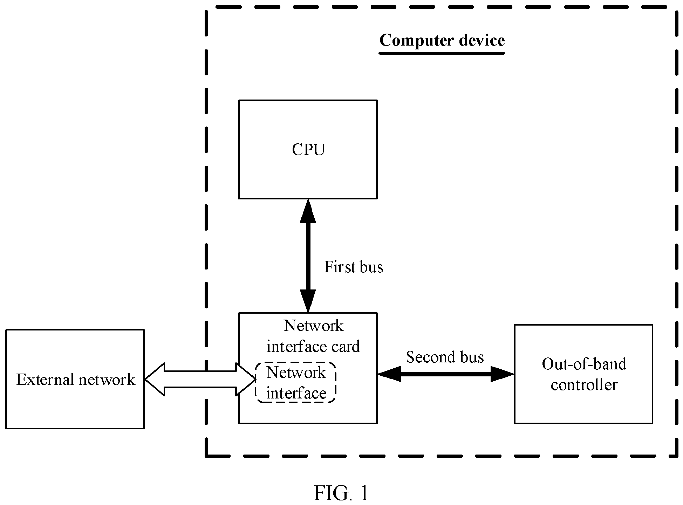

FIG. 1 is a diagram of a system architecture of a computer device. The computer device includes a central processing unit CPU, a network interface card, and an out-of-band controller (which may also be referred to as an out-of-band management chip). The network interface card is connected to the CPU by using a first bus (such as a PCIE bus), and is connected to the out-of-band controller by using a second bus (such as an RMII bus). The network interface card includes at least one network interface (not shown in the figure), and the network interface card communicates with an external network by using the at least one network interface.

The network interface card supports the NCSI protocol. When the network interface card supports the NCSI protocol, any one of the at least one network interface of the network interface card may be used as a network interface for transmitting a data packet between the out-of-band controller and the external network.

The out-of-band controller may perform remote maintenance and management on the computer device by using a dedicated data channel. The out-of-band controller is completely independent of an operating system of the computer device, and may communicate with a basic input output system (basic input output system, processor firmware) and an OS (or an OS management unit) in the CPU by using an out-of-band management interface of the computer device.

For example, the out-of-band controller may include a monitoring management unit outside the computer device, a management system in a management chip outside the processor, a baseboard management controller (baseboard management controller, BMC) of the computer device, a system management module (system management mode, SMM), and the like. It should be noted that a specific form of the out-of-band controller is not limited in embodiments of this application, and the foregoing is merely an example for description. In the following embodiments, only an example in which the out-of-band controller includes the BMC is used for description.

In some embodiments, the computer device includes a plurality of network interface cards. The out-of-band controller is connected to a plurality of network interface cards, so that the out-of-band controller is connected to a plurality of network interfaces of the plurality of network interface cards. Based on this, the out-of-band controller may communicate with the external network by using any one of the plurality of network interfaces.

It should be noted that, when the out-of-band controller is connected to the plurality of network interface cards, the network interface card in the following embodiments may be any one of the plurality of network interface cards.

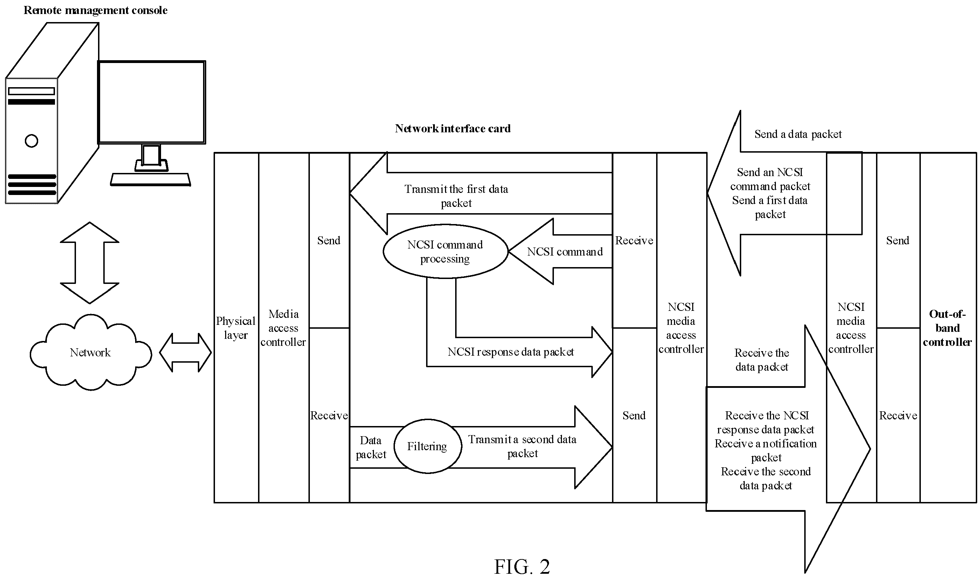

FIG. 2 is a diagram of a communication principle of an out-of-band controller, a network interface card, and an external network.

Data transmitted between the out-of-band controller and the network interface card mainly includes a data packet sent by the out-of-band controller to the external network and an NCSI command packet sent by the out-of-band controller to the network interface card. The following briefly describes sending processes of the two types of data.

A process of sending a first data packet to the external network by the out-of-band controller includes: A transmit port of the out-of-band controller transmits the first data packet to an NCSI media access controller of the out-of-band controller, and the NCSI media access controller sends the first data packet to the network interface card through a second bus. An NCSI media access controller of the network interface card receives the first data packet transmitted through the second bus, and transmits the first data packet to a receive port between the network interface card and the out-of-band controller. The receive port transmits the first data packet to a transmit port between the network interface card and the external network, the transmit port transmits the first data packet to a media access controller responsible for communication between the network interface card and the external network, the media access controller transmits the first data packet to a physical layer of the network interface card, and the physical layer of the network interface card sends the first data packet to the external network, for example, sends the first data packet to a remote management console.

A process in which the out-of-band controller receives a second data packet sent by the external network includes: The physical layer of the network interface card receives the second data packet sent by the external network, and transmits the second data packet to the media access controller, and the media access controller transmits the second data packet to the receive port of the network interface card. The receive port transmits the second data packet to the transmit port between the network interface card and the out-of-band controller, the transmit port transmits the second data packet to the NCSI media access controller of the network interface card, and the media access controller sends the second data packet to the network interface card through the second bus. After receiving the second data packet, the NCSI media access controller of the out-of-band controller transmits the second data packet to the receive port of the out-of-band controller.

In some embodiments, the network interface card may enable a data packet filtering function. In this way, after the receive port of the network interface card receives the second data packet sent by the external network to the out-of-band controller, the second data packet may be first filtered, and then transmitted to the transmit port between the network interface card and the out-of-band controller. For example, the second data packet may be filtered based on a MAC address and/or a VLAN identifier in the second data packet. A specific implementation process is described in a subsequent embodiment, and is not described in detail herein.

A process in which the out-of-band controller sends an NCSI command packet to the network interface card includes: The transmit port of the out-of-band controller transmits the NCSI command packet to the NCSI media access controller of the out-of-band controller, and the media access controller sends the NCSI command packet to the network interface card through the second bus. The NCSI media access controller of the network interface card receives the NCSI command packet transmitted through the second bus, and transmits the NCSI command packet to the receive port between the network interface card and the out-of-band controller. In this way, receiving of the NCSI command packet is completed. After receiving the NCSI command packet, the network interface card processes the NCSI command packet, and returns an NCSI response data packet to the out-of-band controller. In some embodiments, the network interface card may further actively send a notification packet to the out-of-band controller. For example, after a target operation performed by the network interface card takes effect, the network interface card actively sends a notification packet to the out-of-band controller.

Optionally, the out-of-band controller includes an NCSI protocol detection module, an NCSI link status obtaining unit, an NCSI parameter configuration obtaining unit, an NCSI status determining module, and an NCSI abnormality handling module.

The NCSI protocol detection module is configured to detect whether all physical network interfaces in all network interfaces on the computer device support the NCSI protocol, and include, in a monitoring range, network interfaces that support the NCSI protocol.

The NCSI link status obtaining unit is configured to obtain a link status parameter of a network interface of the network interface card.

The NCSI parameter configuration obtaining unit is configured to obtain NCSI parameter configuration information of a network interface of the network interface card.

The NCSI status determining module is configured to: determine whether a link status parameter is abnormal; and if a determining result is yes, record an abnormality cause as an NCSI link status abnormality. Otherwise, it is further determined whether the NCSI parameter configuration information is abnormal.

Determining whether the NCSI parameter configuration information is abnormal includes: determining whether a currently monitored network interface is an NCSI transmit network interface; and if a determining result is yes, checking whether the NCSI parameter configuration information meets an NCSI transmit network interface requirement (that is, whether an NCSI transmit function is enabled), and if the NCSI parameter configuration information does not meet the NCSI transmit network interface requirement (that is, the NCSI transmit function is not enabled), recording the abnormality cause as an NCSI transmit network interface parameter configuration abnormality; or if the determining result is no, checking whether the NCSI parameter configuration information meets an NCSI non-transmit network interface requirement (that is, whether the NCSI transmit function is enabled), and if the NCSI parameter configuration information does not meet the NCSI non-transmit network interface requirement (that is, the NCSI transmit function is enabled), recording the abnormality cause as an NCSI non-transmit network interface parameter configuration abnormality.

The NCSI abnormality handling module is configured to restore, based on the abnormality cause of the NCSI network interface that is recorded by the NCSI status determining module, the status of communication between the out-of-band controller and the external network by using a command corresponding to the abnormality cause. If the abnormality cause is the NCSI link status abnormality, a network interface card initialization command is used to re-initialize an NCSI status of the network interface card to which the network interface belongs and re-activate the network interface. If the abnormality cause is the NCSI transmit network interface parameter configuration abnormality, an Enable Channel command is used to enable the NCSI transmit function of the network interface, so that the network interface can send a data packet sent by the out-of-band controller to the external network. If the abnormality cause is the NCSI non-transmit network interface parameter configuration abnormality, a Disable Channel command is used to disable the NCSI transmit function of the network interface, to prevent the network interface from sending a data packet sent by the out-of-band controller to the external network.

In addition, the NCSI abnormality handling module is further configured to restore a link aggregation mode of the network interface card based on a link aggregation mode before abnormality handling, such as a Bond4 mode. When the link aggregation mode of the network interface card is being set, the out-of-band controller records currently specified target link aggregation information. After the communication status is restored to normal, the NCSI abnormality handling module checks whether a link aggregation function of the network interface card is enabled, and if the link aggregation function is enabled, and content indicated by current link aggregation information of the network interface card is different from content indicated by the target link aggregation information, sends a link aggregation command to the network interface card, so as to restore the link aggregation mode of the network interface card to a mode before the communication status is abnormal.

It should be noted that the system architecture and the application scenario described in the embodiments of this application are intended to describe the technical solutions in the embodiments of this application more clearly, but are not intended to limit the technical solutions provided in the embodiments of this application. A person of ordinary skill in the art may know that, as the system architecture evolves and a new service scenario emerges, the technical solutions provided in the embodiments of this application are also applicable to a similar technical problem.

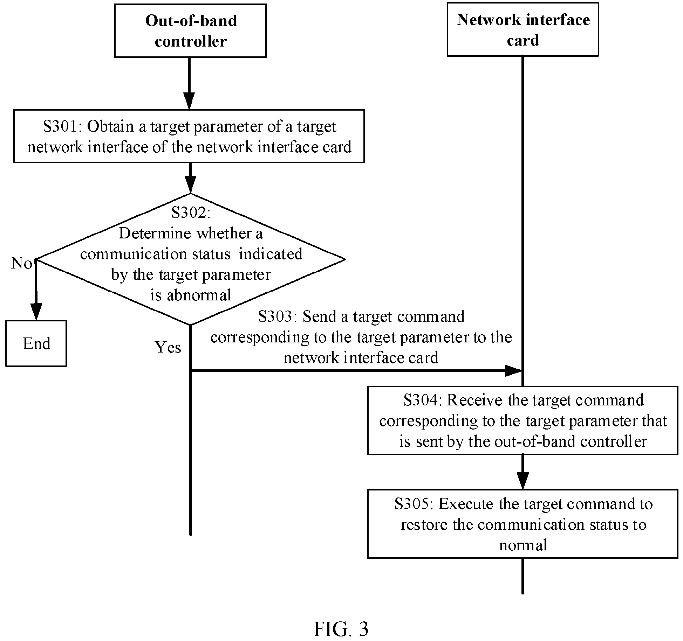

For ease of understanding, the following describes the communication fault handling method provided in this application with reference to the accompanying drawings by using examples. The communication fault handling method is applicable to a system architecture shown in FIG. 3.

The following embodiments of this application are divided into five parts to provide examples for describing the solutions of the communication fault handling method.

The first part describes, with reference to FIG. 3, a process in which an out-of-band controller monitors a target parameter of a target network interface of a network interface card, to monitor and repair a communication status abnormality between the out-of-band controller and an external network.

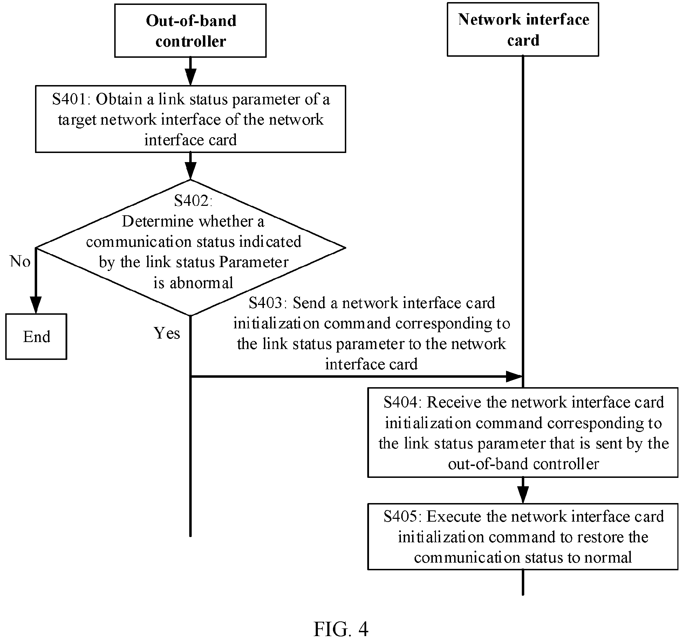

The second part describes, with reference to FIG. 4, a process in which the out-of-band controller monitors and repairs the communication status abnormality between the out-of-band controller and the external network when the target parameter in the first part includes a link status parameter.

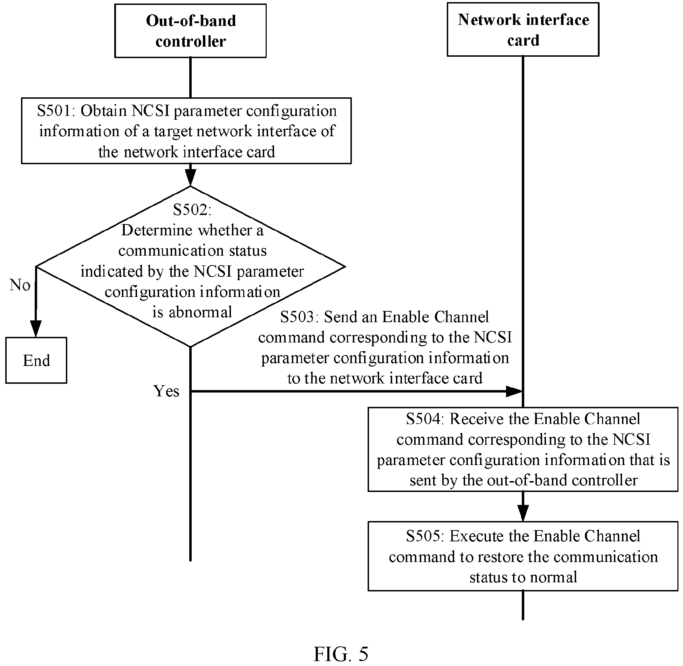

The third part describes, with reference to FIG. 5, a process in which the out-of-band controller monitors and repairs the communication status abnormality between the out-of-band controller and the external network when the target parameter in the first part includes NCSI parameter configuration information, and the NCSI parameter configuration information indicates that an NCSI transmit function of an NCSI transmit network interface is not enabled.

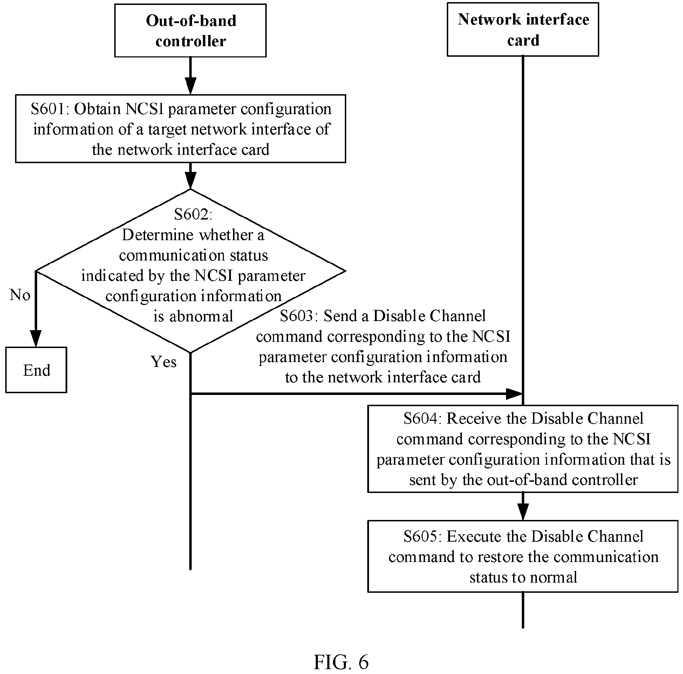

The fourth part describes, with reference to FIG. 6, a process in which the out-of-band controller monitors and repairs the communication status abnormality between the out-of-band controller and the external network when the target parameter in the first part includes NCSI parameter configuration information, and the NCSI parameter configuration information indicates that an NCSI transmit function of an NCSI non-transmit network interface is enabled.

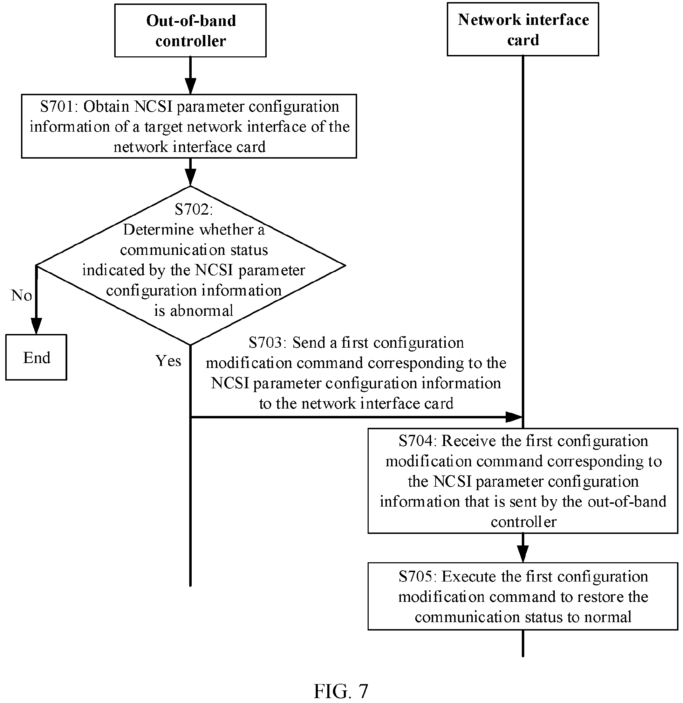

The fifth part describes, with reference to FIG. 7, a process in which the out-of-band controller monitors and repairs the communication status abnormality between the out-of-band controller and the external network when the target parameter in the first part includes NCSI parameter configuration information, and the NCSI parameter configuration information indicates a MAC address of the out-of-band controller that is recorded by the network interface card.

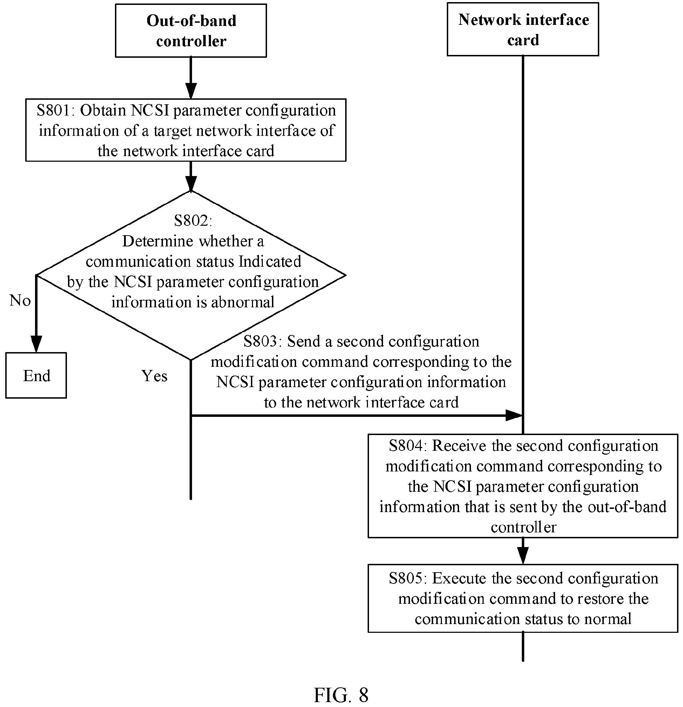

The sixth part describes, with reference to FIG. 8, a process in which the out-of-band controller monitors and repairs the communication status abnormality between the out-of-band controller and the external network when the target parameter in the first part includes NCSI parameter configuration information, and the NCSI parameter configuration information indicates a VLAN identifier of the out-of-band controller that is recorded by the network interface card.

The following is the first part of the embodiments of this application, and describes, with reference to FIG. 3, a process in which an out-of-band controller monitors a target parameter of a target network interface of a network interface card, to monitor and repair the communication status abnormality between the out-of-band controller and an external network.

FIG. 3 is a flowchart of a communication fault handling method according to an example of an embodiment. In an example, the method includes S301 to S305.

S301: An out-of-band controller obtains a target parameter of a target network interface of a network interface card.

The target network interface is configured to transmit a data packet between the out-of-band controller and an external network. Transmitting a data packet between the out-of-band controller and the external network includes sending a data packet sent by the out-of-band controller to the external network and/or receiving a data packet sent by the external network to the out-of-band controller.

It should be noted that when a computer device includes one network interface card, the network interface card is a network interface card that supports the NCSI protocol, and the network interface card is configured to provide a target network interface for communication between the out-of-band controller and the external network. When a computer device includes a plurality of network interface cards, the plurality of network interface cards include at least one network interface card that supports the NCSI protocol, and the network interface card that supports the NCSI protocol is configured to provide a target network interface for communication between the out-of-band controller and the external network.

The target parameter is a parameter that indicates a status of communication between the out-of-band controller and the external network. A value of the target parameter is determined by the network interface card based on an NCSI configuration status of the target network interface.

When the NCSI configuration status of the target network interface is abnormal, the status of communication between the out-of-band controller and the external network is abnormal. Because the value of the target parameter is determined based on the NCSI configuration status of the target network interface, the target parameter can indicate the status of communication between the out-of-band controller and the external network. In addition, the NCSI configuration status is related to the status of communication between the out-of-band controller and the external network. If the NCSI configuration status is abnormal, the communication status is abnormal. Otherwise, the communication status is normal.

In some embodiments, the out-of-band controller sends a command packet to the network interface card, where the command packet includes an identifier of the network interface card and an identifier of the target network interface. The command packet is used to instruct to obtain the target parameter of the target network interface. For example, a type identifier of the command packet may be used to indicate that the command packet is used to obtain the target parameter. After receiving the command packet sent by the out-of-band controller, the network interface card returns the target parameter of the target network interface to the out-of-band controller based on a type of the command packet and the identifier of the target network interface.

Optionally, before S301 is performed, the method further includes: determining that the network interface card supports the NCSI protocol.

Only a network interface card that supports the NCSI protocol can be used for communication between the external network and the out-of-band controller. Therefore, before S301 is performed, it is determined that the network interface card supports the NCSI protocol, which helps ensure that a currently monitored network interface card is a network interface card for communication between the out-of-band controller and the external network, so as to avoid a case in which a communication status abnormality between the out-of-band controller and the external network cannot be detected in a timely manner because another network interface card is monitored.

That the network interface card supports the NCSI protocol can be determined in a plurality of manners. The following uses manner 1 and manner 2 as examples for description.

Manner 1: Determine, based on four-tuple information of the network interface card, that the network interface card supports the NCSI protocol.

Optionally, the four-tuple information includes a manufacturer identifier, a network interface card identifier, an extended manufacturer identifier, and an extended network interface card identifier.

The manufacturer identifier indicates an identifier of a manufacturer that produces the network interface card. The four-tuple information is configured when the network interface card is delivered.

Optionally, the out-of-band controller stores a first mapping relationship between four-tuple information of a network interface card and the NCSI protocol. The first mapping relationship indicates whether the network interface card to which the four-tuple information belongs supports the NCSI protocol or does not support the NCSI protocol.

In some embodiments, the out-of-band controller obtains the four-tuple information of the network interface card. For example, the out-of-band controller may send a first command packet to the network interface card, where a type identifier of the first command packet indicates that the first command packet is used to obtain the four-tuple information of the network interface card. Based on the first command packet, the network interface card returns the four-tuple information of the network interface card to the out-of-band controller. After receiving the four-tuple information of the network interface card, the out-of-band controller determines, based on the four-tuple information and the first mapping relationship, that the network interface card supports the NCSI protocol.

Manner 2: Determine, based on a code of the network interface card, that the network interface card supports the NCSI protocol.

There is a one-to-one correspondence between codes of network interface cards and network interface cards, and different network interface cards have different codes.

In some embodiments, the code of the network interface card is configured for the network interface card by a user who uses the network interface card after the network interface card is delivered.

Optionally, the out-of-band controller stores a second mapping relationship between a code of a network interface card and the NCSI protocol. The second mapping relationship indicates whether the network interface to which the code belongs supports the NCSI protocol or does not support the NCSI protocol.

In some embodiments, the out-of-band controller obtains the code of the network interface card. For example, the out-of-band controller may send a second command packet to the card, where a type identifier of the second command packet indicates that the second command packet is used to obtain the code of the network interface card. Based on the second command packet, the network interface card returns the code of the network interface card to the out-of-band controller. After receiving the code of the network interface card, the out-of-band controller determines, based on the code and the second mapping relationship, that the network interface card supports the NCSI protocol.

It should be noted that, for a network interface card that is configured with four-tuple information, for example, a PCIE network interface card, it may be determined, based on the foregoing manner 1, that the network interface card supports the NCSI protocol, or it may be determined, based on the foregoing manner 2, that the network interface card supports the NCSI protocol. For a network interface card that is not configured with four-tuple information, it may be determined, based on the foregoing manner 2, that the network interface card supports the NCSI protocol.

In addition, network interface cards of a same model of a same manufacturer have same four-tuple information. Therefore, for a network interface card configured with four-tuple information, after it is determined, based on the four-tuple information of the network interface card and the first mapping relationship, that the network interface card supports the NCSI protocol, whether the network interface card supports the NCSI protocol may be further determined based on a code of the network interface card and the second mapping relationship, so as to ensure accuracy of a determining result.

Optionally, S301 includes a plurality of implementations. The following uses two possible implementations as examples for description.

In a possible implementation, S301 includes: obtaining the target parameter of the target network interface of the network interface card based on a preset periodicity.

Specific duration of the preset periodicity is not limited in this embodiment of this application, and may be set based on an actual situation.

In this implementation, the out-of-band controller obtains the target parameter of the target network interface of the network interface card based on the preset periodicity, so as to monitor the status of communication between the out-of-band controller and the external network based on the preset periodicity. In this way, by adjusting the duration of the preset periodicity, a frequency of obtaining the target parameter can be controlled, which helps improve timeliness of monitoring the communication status, and further helps detect a communication status abnormality in a timely manner, repair the communication status abnormality in a timely manner when the communication status is abnormal, and shorten a recovery period.

In another possible implementation, S301 includes the following steps.

Step 1: Receive target information sent by the network interface card.

The target information indicates to determine a status of communication between the out-of-band controller and the external network.

In some embodiments, after a target operation performed by the network interface card takes effect, the network interface card sends the target information to the out-of-band controller in response to the performed target operation that has taken effect, so as to indicate the out-of-band controller to determine the status of communication between the out-of-band controller and the external network. The target operation includes any one of restarting a firmware program of the network interface card, upgrading the firmware program of the network interface card, downgrading the firmware program of the network interface card, and modifying a configuration of the firmware program of the network interface card.

Step 2: Obtain the target parameter of the target network interface of the network interface card in response to the target information.

In some embodiments, after receiving the target information sent by the network interface card, the out-of-band controller obtains the target parameter of the target network interface of the network interface card, so as to determine the status of communication between the out-of-band controller and the external network based on the target parameter.

In this implementation, after receiving the target information that is sent by the network interface card and that indicates to determine the communication status, the out-of-band controller obtains the target parameter of the target network interface of the network interface card in response to the target information. In this way, the out-of-band controller does not need to frequently obtain the target parameter to ensure timely discovery of a communication status abnormality, which helps save operation resources of the out-of-band controller.

S302: The out-of-band controller determines whether the communication status indicated by the target parameter is abnormal.

If a determining result is yes, S303 is performed. If the determining result is no, the procedure ends.

Optionally, the out-of-band controller records a target value of the target parameter, and a communication status indicated by the target value is normal.

In some embodiments, the out-of-band controller determines, based on a value of the target parameter, whether the communication status indicated by the target parameter is abnormal. For example, if the value of the target parameter obtained by the out-of-band controller from the network interface card is different from the target value recorded by the out-of-band controller, it is determined that the target parameter indicates that the communication status is abnormal; otherwise, it is determined that the communication status is normal.

The communication status abnormality indicated by the target parameter is caused by the NCSI configuration status abnormality. Therefore, when it is determined, based on the target parameter, that the communication status is abnormal, it can be determined that an abnormality cause of the communication status abnormality is that the NCSI configuration status indicated by the target parameter is abnormal. The NCSI configuration status indicated by the target parameter is an NCSI configuration status used to determine the value of the target parameter.

S303: The out-of-band controller sends a target command corresponding to the target parameter to the network interface card.

The target command is used to instruct the network interface card to execute the target command, to restore the communication status to normal.

Optionally, the out-of-band controller stores a target correspondence between a target parameter and a target command.

The target correspondence indicates that a repair command that needs to be used when the target parameter indicates that the communication status is abnormal is the target command, that is, indicates to use the target command for repair when the NCSI configuration status indicated by the target parameter is abnormal.

The target command is the repair command that needs to be used when the NCSI configuration status corresponding to the target parameter is abnormal, that is, a repair command that needs to be used to repair the abnormality cause of the communication status abnormality. This improves reliability of repairing the communication status abnormality by using the target command, and further helps improve a success rate of repairing the communication status abnormality by using the target command.

In some embodiments, after determining that the target parameter indicates that the communication status is abnormal, the out-of-band controller sends, based on the target parameter and the target correspondence, the target command that needs to be used to repair the communication status abnormality to the network interface card through an RMII bus.

S304: The network interface card receives the target command corresponding to the target parameter that is sent by the out-of-band controller.

In some embodiments, the network interface card receives, through an RMII bus, the target command sent by the out-of-band controller. After receiving the target, the network interface card returns a response to the out-of-band controller through the RMII bus to notify the out-of-band controller that the network interface card has received the target command.

S305: The network interface card executes the target command to restore the communication status to normal.

In some embodiments, after the network interface card successfully executes the target command, the network interface card sends a notification to the out-of-band controller, so as to notify the out-of-band controller that the network interface card successfully executes the target command, and the communication status is restored to normal.

Optionally, the out-of-band controller stores target link aggregation information between the network interface card and the external network, and the target link aggregation information indicates an NCSI transmit network interface identifier and an NCSI receive network interface identifier of the network interface card.

Optionally, the communication fault handling method further includes S306: When the communication status is restored to normal, the out-of-band controller sends a link aggregation command to the network interface card if a link aggregation function of the network interface card is enabled, and content indicated by current link aggregation information of the network interface card is different from content indicated by the target link aggregation information.

The link aggregation command is used to instruct to set a network interface indicated by the NCSI transmit network interface identifier as an NCSI transmit network interface of the network interface card, and set a network interface indicated by the NCSI receive network interface identifier as an NCSI receive network interface of the network interface card. The NCSI transmit network interface of the network interface card or the NCSI receive network interface of the network interface card is the target network interface.

In some embodiments, the out-of-band controller stores the latest specified target link aggregation information of the network interface card. After the communication status is restored to normal, if the out-of-band controller determines that the link aggregation function of the network interface card is enabled, and the content indicated by the current link aggregation information of the network interface card is different from the content indicated by the target link aggregation information, the out-of-band controller sends the link aggregation command to the network interface card, to instruct the network interface card to set a link aggregation mode based on the target link aggregation information.

After the target operation performed by the network interface card takes effect, not only the status of communication between the out-of-band controller and the external network is abnormal, but also a link aggregation mode between the network interface card and the external network is changed. Therefore, after the communication status is restored to normal, the out-of-band controller sends the link aggregation command to the network interface card, so that the network interface card restores to the link aggregation mode before the target operation is performed.

Optionally, the link aggregation command includes an Enable Broadcast Filter command (Enable Broadcast Filter command) (0x10)/a Disable Broadcast Filter command (Disable Broadcast Filter command) (0x11), an Enable Global Multicast Filter command (Enable Global Multicast Filter command) (0x12)/a Disable Global Multicast Filter command (Disable Global Multicast Filter command) (0x13), or an Enable Channel command (Enable Channel command) (0x03)/a Disable Channel command (Disable Channel command) (0x04).

In some embodiments, the Enable Broadcast Filter command (0x10), the Enable Global Multicast Filter command (0x12), and the Enable Channel command (0x03) are commands for the NCSI receive network interface indicated by the NCSI receive network interface identifier.

In some embodiments, the Disable Broadcast Filter command (0x11), the Disable Global Multicast Filter command (0x13), and the Disable Channel command (0x04) are commands for the NCSI transmit network interface indicated by the NCSI transmit network interface identifier.

In the foregoing embodiment, the out-of-band controller actively obtains the target parameter that can indicate the status of communication between the out-of-band controller and the external network, to actively monitor whether the status of communication between the out-of-band controller and the external network is abnormal. If the target parameter indicates that the communication status is abnormal, the out-of-band controller sends the target command corresponding to the target parameter to the network interface card, and instructs the network interface card to execute the target command, to restore the communication status to normal. The out-of-band controller can actively monitor whether the communication status is abnormal, and actively send, to the network interface card when the communication status is abnormal, the target command used to repair the communication status abnormality, so as to automatically restore the communication status to normal. In this way, there is no need to manually repair the communication status abnormality between the out-of-band controller and the external network, which helps reduce manual costs and shorten a recovery period.

The foregoing describes the implementation process of the first part of the embodiments of this application. The following is the second part of the embodiments of this application, and describes, with reference to FIG. 4, a process in which the out-of-band controller monitors and repairs the communication status abnormality between the out-of-band controller and the external network when the target parameter in the first part includes a link status parameter.

FIG. 4 is a flowchart of a communication fault handling method according to an example of an embodiment. In an example, the method includes S401 to S405.

S401: An out-of-band controller obtains a link status parameter of a target network interface of a network interface card.

The link status parameter is a parameter that indicates an NCSI link status between the target network interface and an external network.

An NCSI configuration status includes the NCSI link status. A value of the link status parameter is determined by the network interface card based on the NCSI link status of the target network interface. Therefore, the out-of-band controller may determine the NCSI link status of the target network interface based on the value of the link status parameter. In addition, the NCSI link status is related to a status of communication between the out-of-band controller and the external network. If the NCSI link status is abnormal, the communication status is abnormal. Otherwise, the communication status is normal.

In some embodiments, the out-of-band controller sends a Get Link Status command (Get Link Status command, 0x0a) to the network interface card. The Get Link Status command includes an identifier of the network interface card and an identifier of the target network interface, and a packet type identifier of the Get Link Status command indicates to obtain the link status parameter. After receiving the Get Link Status command sent by the out-of-band controller, the network interface card returns the link status parameter of the target network interface to the out-of-band controller based on the packet type identifier of the Get Link Status command and the identifier of the target network interface.

It should be noted that an implementation principle of S401 is the same as the implementation principle of S301. Therefore, for an implementation process of S401 and related description, refer to the foregoing S301. Details are not described herein again.

S402: The out-of-band controller determines whether a communication status indicated by the link status parameter is abnormal.

If a determining result is yes, S403 is performed. If the determining result is no, the procedure ends.

In some embodiments, the out-of-band controller determines, based on whether the NCSI link status indicated by the link status parameter is abnormal, whether the communication status indicated by the link status is abnormal. If the NCSI link status indicated by the link status parameter is abnormal, the determining result of S402 is yes. If the NCSI link status indicated by the link status parameter is normal, the determining result of S403 is no.

Optionally, if the determining result is yes, the out-of-band controller records an abnormality cause of the communication status abnormality as an NCSI link status abnormality of the target network interface. The abnormality cause of the communication status abnormality is determined, and may be used to subsequently determine a proper target command for the communication status abnormality. In this way, a degree of matching between the target command for repairing the communication status abnormality and the abnormality cause of the communication status abnormality is improved, thereby improving a success rate of the target command and improving reliability of using the target command to repair the communication status abnormality.

Optionally, the out-of-band controller records a first value of the link status parameter, and the first value indicates that the NCSI link status is normal. Because the first value indicates that the NCSI link status is normal, a communication status indicated by the first value is normal.

Optionally, the out-of-band controller determines, based on a value of the link status parameter, whether the communication status indicated by the link status parameter is abnormal. For example, if the value of the link status parameter that is obtained by the out-of-band controller from the network interface card is different from the first value recorded by the out-of-band controller, it is determined that the communication status indicated by the link status parameter is abnormal; otherwise, it is determined that the communication status is normal.

The communication status abnormality indicated by the link status parameter is caused by the NCSI link status abnormality. Therefore, when it is determined, based on the link status parameter, that the communication status is abnormal, it can be determined that an abnormality cause of the communication status abnormality is that the NCSI link status indicated by the link status parameter is abnormal. The NCSI link status indicated by the link status parameter is an NCSI link status used to determine the value of the link status parameter.

It should be noted that an implementation principle of S402 is the same as the implementation principle of S302. Therefore, for an implementation process of S402 and related description, refer to the foregoing S302. Details are not described herein again.

S403: The out-of-band controller sends a network interface card initialization command corresponding to the link status parameter to the network interface card.

The network interface card initialization command is used to instruct the network interface card to set the NCSI link status to a predefined NCSI link state, where the predefined NCSI link state is a normal state.

Optionally, the out-of-band controller stores a first correspondence between a link status parameter and a network interface card initialization command.

The first correspondence indicates that a repair command that needs to be used when the link status parameter indicates that the communication status is abnormal is the network interface card initialization command, that is, indicates to use the network interface card initialization command for repair when the NCSI link status indicated by the link status parameter is abnormal.

Optionally, the out-of-band controller stores a predefined NCSI link state, and the predefined NCSI link state is a normal state.

In some embodiments, when determining that the link status parameter indicates that the communication status is abnormal, the out-of-band controller sends the network interface initialization command to the network interface card based on the first correspondence, to instruct the network interface card to set the NCSI link status to the predefined NCSI link state, so that the NCSI link status between the target network interface and the external network is a normal state, and further the status of communication between the out-of-band controller and the external network is restored to normal.

Optionally, the network interface card initialization command includes at least one of a Select Package command (Select Package command, 0x01), a Clear Initial State command (Clear Initial State command, 0x00), an Enable Channel command (Enable Channel command, 0x03), a Disable Channel Network TX command (Disable Channel Network TX command, 0x07), an Enable Channel Network TX command (Enable Channel Network TX command, 0x06), an Enable Broadcast Filter command (Enable Broadcast Filter command, 0x10), a Disable Global Multicast Filter command (Disable Global Multicast Filter command, 0x13), a Set VLAN Filter command (Set VLAN Filter command, 0x0B), an Enable VLAN command (Enable VLAN command, 0x0C), and a Disable VLAN command (Disable VLAN command, 0x0D).

The Enable Channel Network TX command is applicable to an NCSI transmit network interface of the network interface card, and the Disable Channel Network TX command is applicable to an NCSI non-transmit network interface of the network interface card.

It should be noted that an implementation principle of S403 is the same as the implementation principle of S303. Therefore, for an implementation process of S403 and related description, refer to the foregoing S303. Details are not described herein again.

S404: The network interface card receives the network interface card initialization command corresponding to the link status parameter that is sent by the out-of-band controller.

It should be noted that an implementation principle of S404 is the same as the implementation principle of S304. Therefore, for an implementation process of S404 and related description, refer to the foregoing S304. Details are not described herein again.

S405: The network interface card executes the network interface card initialization command to restore the communication status to normal.

It should be noted that an implementation principle of S405 is the same as the implementation principle of S305. Therefore, for an implementation process of S405 and related description, refer to the foregoing S305. Details are not described herein again.

S406: Refer to the foregoing S306.

In the foregoing embodiment, the out-of-band controller actively obtains the link status parameter that can indicate the status of communication between the out-of-band controller and the external network, and the link status parameter indicates the NCSI link status between the target network interface and the external network, so as to actively monitor whether the status of communication between the out-of-band controller and the external network is abnormal. If the link status parameter indicates that the communication status is abnormal, the out-of-band controller sends the network interface card initialization command corresponding to the link status parameter to the network interface card, and instructs the network interface card to execute the network interface card initialization command, to restore the communication status to normal. The out-of-band controller can actively monitor whether the communication status is abnormal, and actively send, to the network interface card when the communication status is abnormal, the network interface card initialization command used to repair the communication status abnormality, so as to automatically restore the communication status to normal. In this way, there is no need to manually repair the communication status abnormality between the out-of-band controller and the external network, which helps reduce manual costs and shorten a recovery period.

In addition, the abnormality cause of the communication status abnormality indicated by the link status parameter is the NCSI link status abnormality, and the network interface card initialization command can instruct the network interface card to set the NCSI link status to the normal state. Therefore, the out-of-band controller pre-establishes the correspondence between a link status parameter and a network card initialization command, and sends the network interface card initialization command to the network interface card when the link status parameter indicates that the communication status is abnormal. This improves a degree of matching between the network interface card initialization command used to repair the communication status abnormality and the abnormality cause (that is, the NCSI link status abnormality) of the communication status abnormality. In this way, accuracy and reliability of using the network interface card initialization command to repair the communication status abnormality are ensured, thereby ensuring that the abnormality cause of the communication status abnormality is eliminated, and the communication status is restored to normal.

The foregoing describes the implementation process of the second part of the embodiments of this application. The following is the third part of the embodiments of this application, and describes, with reference to FIG. 5, a process in which the out-of-band controller monitors and repairs the communication status abnormality between the out-of-band controller and the external network when the target parameter in the first part includes NCSI parameter configuration information, and the NCSI parameter configuration information indicates that an NCSI transmit function of an NCSI transmit network interface is not enabled.

FIG. 5 is a flowchart of a communication fault handling method according to an example of an embodiment. In an example, the method includes S501 to S505.

S501: An out-of-band controller obtains NCSI parameter configuration information of a target network interface of a network interface card.

The target network interface is an NCSI transmit network interface. The NCSI parameter configuration information indicates an NCSI transmit network interface parameter configuration status. The NCSI transmit network interface parameter configuration status includes: An NCSI transmit function is enabled, or the NCSI transmit function is disabled.

An NCSI configuration status includes NCSI transmit network interface parameter configuration. A value of the NCSI parameter configuration information is determined by the network interface card based on the NCSI transmit network interface parameter configuration status. Therefore, the out-of-band controller can determine the NCSI transmit network interface parameter configuration status based on the value of the NCSI parameter configuration information.

Optionally, the NCSI parameter configuration information includes a first parameter, and the first parameter indicates that the NCSI transmit function is enabled or that the NCSI transmit function is disabled.

In some embodiments, the out-of-band controller pre-stores a third mapping relationship between a network interface identifier of the network interface card and the NCSI transmit network interface. The third mapping relationship indicates whether a network interface to which a network interface identifier belongs is the NCSI transmit network interface. Based on this, the out-of-band controller may determine, based on an identifier of the target network interface and the third mapping relationship, that the target network interface is the NCSI transmit network interface.

In some embodiments, the out-of-band controller sends a Get Parameters command (Get Parameters command, 0x17) to the network interface card. The Get Parameters command includes an identifier of the network interface card and the identifier of the target network interface, and a packet type identifier of the Get Parameters command indicates to obtain the NCSI parameter configuration information. After receiving the Get Parameters command sent by the out-of-band controller, the network interface card returns the NCSI parameter configuration information of the target network interface to the out-of-band controller based on the packet type identifier of the Get Parameters command and the identifier of the target network interface.

It should be noted that an implementation principle of S501 is the same as the implementation principle of S401. Therefore, for an implementation process of S501 and related description, refer to the foregoing S401. Details are not described herein again.

S502: The out-of-band controller determines whether a communication status indicated by the NCSI parameter configuration information is abnormal.

If a determining result is yes, S503 is performed. If the determining result is no, the procedure ends.

In some embodiments, the out-of-band controller determines, based on the NCSI transmit network interface parameter configuration status indicated by the NCSI parameter configuration information, whether the communication status indicated by the NCSI parameter configuration information is abnormal. If the NCSI parameter configuration information indicates that the NCSI transmit function of the target network interface is not enabled, the determining result of S502 is yes. If the NCSI parameter configuration information indicates that the NCSI transmit function of the target network interface is not enabled, the determining result of S502 is no.

Optionally, if the determining result is yes, the out-of-band controller records an abnormality cause of the communication status abnormality as an NCSI transmit network interface parameter configuration abnormality. The abnormality cause of the communication status abnormality is determined, and may be used to subsequently determine a proper target command for the communication abnormality. In this way, a degree of matching between the target command for repairing the communication status abnormality and the abnormality cause of the communication status abnormality is improved, thereby improving a success rate of the target command and improving reliability of using the target command to repair the communication status abnormality.

Because the target network interface is the NCSI transmit network interface, the target network interface needs to send a data packet sent by the out-of-band controller to the external network. If the NCSI transmit function of the target network interface is not enabled, the target network interface cannot send, to the external network, the data packet sent by the out-of-band controller to the external network. Therefore, if the NCSI transmit function of the target network interface is not enabled, the NCSI parameter configuration is abnormal, and the NCSI parameter configuration information indicates that the communication status is abnormal. Otherwise, the NCSI parameter configuration information indicates that the communication status is normal.

Optionally, the out-of-band controller records a second value of the NCSI parameter configuration information, and the second value indicates that the NCSI transmit function of the target network interface is enabled. Because the second value indicates that the NCSI transmit function of the target network interface is enabled, a communication status indicated by the second value is normal. For example, if the NCSI parameter configuration information includes a first parameter, the second value is a value of the first parameter.

Optionally, the out-of-band controller determines, based on a value of the NCSI parameter configuration information, whether the communication status indicated by the NCSI parameter configuration information is abnormal. For example, if the value of the NCSI parameter configuration information obtained by the out-of-band controller from the network interface card is different from the second value recorded by the out-of-band controller, it is determined that the communication status indicated by the NCSI parameter configuration information is abnormal; otherwise, it is determined that the communication status is normal. For example, if a value of the first parameter is different from the second value, it is determined that the communication status indicated by the NCSI parameter configuration information is abnormal; otherwise, it is determined that the communication status is normal.

The communication status abnormality indicated by the NCSI parameter configuration information is caused by an NCSI transmit network interface parameter configuration abnormality. Therefore, when it is determined, based on the NCSI parameter configuration information, that the communication status is abnormal, it can be determined that an abnormality cause of the communication status abnormality is that the NCSI transmit network interface parameter configuration indicated by the NCSI parameter configuration information is abnormal. The NCSI transmit network interface parameter configuration indicated by the NCSI parameter configuration information is the NCSI transmit network interface parameter configuration status used to determine the value of the NCSI parameter configuration information.

It should be noted that an implementation principle of S502 is the same as the implementation principle of S402. Therefore, for an implementation process of S502 and related description, refer to the foregoing S402. Details are not described herein again.

S503: The out-of-band controller sends an Enable Channel command corresponding to the NCSI parameter configuration information to the network interface card.

The Enable Channel command is used to instruct the network interface card to enable the NCSI transmit function of the target network interface, so that the target network interface can send a data packet sent by the out-of-band controller to the external network.

Optionally, the out-of-band controller stores a second correspondence between NCSI parameter configuration information and the Enable Channel command.

The second correspondence indicates that a repair command that needs to be used when the NCSI parameter configuration information indicates that the communication status is abnormal is the Enable Channel command, that is, indicates to use the Enable Channel command when the NCSI transmit network interface parameter configuration indicated by the NCSI parameter configuration information is abnormal.

In some embodiments, when determining that the NCSI parameter configuration information indicates that the communication status is abnormal, the out-of-band controller sends the Enable Channel command (Enable Channel command, 0x03) to the network interface card based on the second correspondence, so as to instruct the network interface card to enable the NCSI transmit function of the target network interface, so that the target network interface can send a data packet sent by the out-of-band controller to the external network.

It should be noted that an implementation principle of S503 is the same as the implementation principle of S403. Therefore, for an implementation process of S503 and related description, refer to the foregoing S403. Details are not described herein again.

S504: The network interface card receives the Enable Channel command corresponding to the NCSI parameter configuration information that is sent by the out-of-band controller.

It should be noted that an implementation principle of S504 is the same as the implementation principle of S304. Therefore, for an implementation process of S504 and related description, refer to the foregoing S304. Details are not described herein again.

S505: The network interface card executes the Enable Channel command to restore the communication status to normal.

It should be noted that an implementation principle of S505 is the same as the implementation principle of S305. Therefore, for an implementation process of S505 and related description, refer to the foregoing S305. Details are not described herein again.

S506: Refer to S306.

In the foregoing embodiment, the out-of-band controller actively obtains the NCSI parameter configuration information that can indicate the status of communication between the out-of-band controller and the external network, where the NCSI parameter configuration information indicates an enabling status of the NCSI transmit function of the target network interface, so as to actively monitor whether the status of communication between the out-of-band controller and the external network is abnormal. If the NCSI parameter configuration information indicates that the communication status is abnormal, the out-of-band controller sends the Enable Channel command corresponding to the NCSI parameter configuration information to the network interface card, and instructs the network interface card to enable the NCSI transmit function of the target network interface, to restore the communication status to normal. The out-of-band controller can actively monitor whether the communication status is abnormal, and actively send, to the network interface card when the communication status is abnormal, the Enable Channel command used to repair the communication status abnormality, so as to automatically restore the communication status to normal. In this way, there is no need to manually repair the communication status abnormality between the out-of-band controller and the external network, which helps reduce manual costs and shorten a recovery period.

In addition, the abnormality cause of the communication status abnormality indicated by the NCSI parameter configuration information is the NCSI transmit network interface parameter configuration abnormality, and the Enable Channel command can instruct the network interface card to enable the NCSI transmit function of the target network interface. Therefore, when it is determined that the NCSI parameter configuration information indicates that the communication status is abnormal, the Enable Channel command is sent to the network interface card. This improves a degree of matching between the Enable Channel command used to repair the communication status abnormality and the abnormality cause (that is, the NCSI transmit network interface parameter configuration abnormality) of the communication status abnormality. In this way, accuracy and reliability of using the Enable Channel command to repair the communication status abnormality are ensured, thereby ensuring that the abnormality cause of the communication status abnormality is eliminated, and the communication status is restored to normal.

The foregoing describes the implementation process of the third part of the embodiments of this application. The following is the fourth part of the embodiments of this application, and describes, with reference to FIG. 6, a process in which the out-of-band controller monitors and repairs the communication status abnormality between the out-of-band controller and the external network when the target parameter in the first part includes NCSI parameter configuration information, and the NCSI parameter configuration information indicates that an NCSI transmit function of an NCSI non-transmit network interface is enabled.

FIG. 6 is a flowchart of a communication fault handling method according to an example of an embodiment. In an example, the method includes S601 to S605.

S601: An out-of-band controller obtains NCSI parameter configuration information of a target network interface of a network interface card.

The target network interface is an NCSI non-transmit network interface. The NCSI parameter configuration information indicates an NCSI non-transmit network interface parameter configuration status. The NCSI non-transmit network interface parameter configuration status includes: An NCSI transmit function is enabled, or the NCSI transmit function is disabled.

In some embodiments, the NCSI non-transmit network interface includes an NCSI receive network interface. In other embodiments, the NCSI non-transmit network interface may further include a network interface that is not currently used by the network interface card.

An NCSI configuration status includes NCSI non-transmit network interface parameter configuration. A value of the NCSI parameter configuration information is determined by the network interface card based on the NCSI non-transmit network interface parameter configuration status. Therefore, the out-of-band controller can determine the NCSI non-transmit network interface parameter configuration status based on the value of the NCSI parameter configuration information.

In some embodiments, the out-of-band controller pre-stores a third mapping relationship between a network interface identifier of the network interface card and the NCSI transmit network interface. The third mapping relationship indicates whether a network interface to which a network interface identifier belongs is the NCSI transmit network interface. Based on this, the out-of-band controller may determine, based on an identifier of the target network interface and the third mapping relationship, that the target network interface is the NCSI non-transmit network interface.

It should be noted that an implementation principle of S601 is the same as the implementation principle of S501. Therefore, for an implementation process of S601 and related description, refer to the foregoing S501. Details are not described herein again.

S602: The out-of-band controller determines whether a communication status indicated by the NCSI parameter configuration information is abnormal.

If a determining result is yes, S603 is performed. If the determining result is no, the procedure ends.

In some embodiments, the out-of-band controller determines, based on the NCSI non-transmit network interface parameter configuration status indicated by the NCSI parameter configuration information, whether the communication status indicated by the NCSI parameter configuration information is abnormal. If the NCSI parameter configuration information indicates that the NCSI transmit function of the target network interface is enabled, the determining result of the S602 is yes. If the NCSI parameter configuration information indicates that the NCSI transmit function of the target network interface is not enabled, the determining result of S602 is no.

Optionally, if the determining result is yes, the out-of-band controller records an abnormality cause of the communication status abnormality as an NCSI non-transmit network interface parameter configuration abnormality. The abnormality cause of the communication status abnormality is determined, and may be used to subsequently determine a proper target command for the communication abnormality. In this way, a degree of matching between the target command for repairing the communication status abnormality and the abnormality cause of the communication status abnormality is improved, thereby improving a success rate of the target command and improving reliability of using the target command to repair the communication status abnormality.

Because the target network interface is the NCSI non-transmit network interface, the target network interface does not need to send a data packet sent by the out-of-band controller to the external network. If the NCSI transmit function of the target network interface is enabled, the target network interface sends, to the external network, the data packet sent by the out-of-band controller to the external network. Therefore, if the NCSI transmit function of the target network interface is enabled, the NCSI parameter configuration is abnormal, and the NCSI parameter configuration information indicates that the communication status is abnormal. Otherwise, the NCSI parameter configuration information indicates that the communication status is normal.

The communication status abnormality indicated by the NCSI parameter configuration information is caused by an NCSI non-transmit network interface parameter configuration abnormality. Therefore, when it is determined, based on the NCSI parameter configuration information, that the communication status is abnormal, it can be determined that an abnormality cause of the communication status abnormality is that the NCSI non-transmit network interface parameter configuration indicated by the NCSI parameter configuration information is abnormal. The NCSI non-transmit network interface parameter configuration indicated by the NCSI parameter configuration information is the NCSI non-transmit network interface parameter configuration status used to determine the value of the NCSI parameter configuration information.

It should be noted that an implementation principle of S602 is the same as the implementation principle of S502. Therefore, for an implementation process of S602 and related description, refer to the foregoing S502. Details are not described herein again.

S603: The out-of-band controller sends a Disable Channel command corresponding to the NCSI parameter configuration information to the network interface card.

The Disable Channel command is used to instruct the network interface to disable the NCSI transmit function of the target network interface, so as to prevent the target network interface from sending a data packet sent by the out-of-band controller to the external network.

Optionally, the out-of-band controller stores a third correspondence between NCSI parameter configuration information and the Disable Channel command.

The third correspondence indicates that a repair command that needs to be used when the NCSI parameter configuration information indicates that the communication status is abnormal is the Disable Channel command, that is, indicates to use the Disable Channel command when the NCSI non-transmit network interface parameter configuration indicated by the NCSI parameter configuration information is abnormal.

In some embodiments, when determining that the NCSI parameter configuration information indicates that the communication status is abnormal, the out-of-band controller sends the Disable Channel command (Disable Channel command, 0x04) to the network interface card based on the third correspondence, to instruct the network interface card to disable the NCSI transmit function of the target network interface, so as to prevent the target network interface from sending a data packet sent by the out-of-band controller to the external network.

It should be noted that an implementation principle of S603 is the same as the implementation principle of S503. Therefore, for an implementation process of S603 and related description, refer to the foregoing S503. Details are not described herein again.

S604: The network interface card receives the Disable Channel command sent by the out-of-band controller.

It should be noted that an implementation principle of S604 is the same as the implementation principle of S304. Therefore, for an implementation process of S604 and related description, refer to the foregoing S304. Details are not described herein again.

S605: The network interface card executes the Enable Channel command to restore the communication status to normal.

It should be noted that an implementation principle of S605 is the same as the implementation principle of S305. Therefore, for an implementation process of S605 and related description, refer to the foregoing S305. Details are not described herein again.

S606: Refer to S306.

In the foregoing embodiment, the out-of-band controller actively obtains the NCSI parameter configuration information that can indicate the status of communication between the out-of-band controller and the external network, where the NCSI parameter configuration information indicates an enabling status of the NCSI transmit function of the target network interface, so as to actively monitor whether the status of communication between the out-of-band controller and the external network is abnormal. If the NCSI parameter configuration information indicates that the communication status is abnormal, the out-of-band controller sends the Disable Channel command corresponding to the NCSI parameter configuration information to the network interface card, and instructs the network interface card to disable the NCSI transmit function of the target network interface, to restore the communication status to normal. The out-of-band controller can actively monitor whether the communication status is abnormal, and actively send, to the network interface card when the communication status is abnormal, the Disable Channel command used to repair the communication status abnormality, so as to automatically restore the communication status to normal. In this way, there is no need to manually repair the communication status abnormality between the out-of-band controller and the external network, which helps reduce manual costs and shorten a recovery period.

In addition, the abnormality cause of the communication status abnormality indicated by the NCSI parameter configuration information is the NCSI non-transmit network interface parameter configuration abnormality, and the Disable Channel command can instruct the network interface card to disable the NCSI transmit function of the target network interface. Therefore, when it is determined that the NCSI parameter configuration information indicates that the communication status is abnormal, the Disable Channel command is sent to the network interface card. This improves a degree of matching between the Disable Channel command used to repair the communication status abnormality and the abnormality cause (that is, the NCSI non-transmit network interface parameter configuration abnormality) of the communication status abnormality. In this way, accuracy and reliability of using the Disable Channel command to repair the communication status abnormality are ensured, thereby ensuring that the abnormality cause of the communication status abnormality is eliminated, and the communication status is restored to normal.

The foregoing describes the implementation process of the fourth part of the embodiments of this application. The following is the fifth part of the embodiments of this application, and describes, with reference to FIG. 7, a process in which the out-of-band controller monitors and repairs the communication status abnormality between the out-of-band controller and the external network when the target parameter in the first part includes NCSI parameter configuration information, and the NCSI parameter configuration information includes a MAC address recorded by the network interface card.

FIG. 7 is a flowchart of a communication fault handling method according to an example of an embodiment. In an example, the method includes S701 to S705.

S701: An out-of-band controller obtains NCSI parameter configuration information of a target network interface of a network interface card from the network interface card.

The NCSI parameter configuration information indicates a media access control MAC address of the out-of-band controller that is recorded by the network interface card.

It should be noted that an implementation principle of S701 is the same as the implementation principle of S301. Therefore, for an implementation process of S701 and related description, refer to the foregoing S301. Details are not described herein again.

S702: The out-of-band controller determines whether a communication status indicated by the NCSI parameter configuration information is abnormal.

If a determining result is yes, S703 is performed. If the determining result is no, the procedure ends.

In some embodiments, the out-of-band controller stores an actual MAC address, and the actual MAC address is a correct address of the out-of-band controller. The out-of-band controller determines whether the MAC address is the same as the actual MAC address of the out-of-band controller, to determine the determining result of S702. If the MAC address is different from the actual MAC address of the out-of-band controller, the determining result of S702 is yes. If the MAC address is the same as the actual MAC address of the out-of-band controller, the determining result of S702 is no.

The actual MAC address of the out-of-band controller is the correct address of the out-of-band controller. If the MAC address recorded by the network interface card is different from the actual MAC address of the out-of-band controller, it indicates that the actual MAC address of the out-of-band controller that is recorded by the network interface card is incorrect. When a data packet filtering function is enabled, the network interface card verifies a receive end address (that is, the actual MAC address of the out-of-band controller) recorded in a data packet. That is, the network interface card verifies whether the receive end address recorded in the data packet is the same as the MAC address of the out-of-band controller that is recorded by the network interface card. If the MAC address of the out-of-band controller that is recorded by the network interface card is incorrect, a verification result may be that the receive end address recorded in the data packet is different from the MAC address recorded by the network interface card, and the network interface card filters out the data packet and does not send the data packet to the out-of-band controller. Therefore, if the MAC address is different from the actual MAC address of the out-of-band controller, the NCSI parameter configuration information is abnormal, and the NCSI parameter configuration information indicates that the communication status is abnormal. Otherwise, the NCSI parameter configuration information indicates that the communication status is normal.

Optionally, if the determining result is yes, the out-of-band controller records the communication status abnormality as a MAC address abnormality. The abnormality cause of the communication status abnormality is determined, and may be used to subsequently determine a proper repair command for the communication abnormality. In this way, a degree of matching between the repair command for repairing the communication status abnormality and the direct cause of the communication status abnormality is improved, thereby improving a success rate of the repair command and improving reliability of repairing the communication status abnormality.

It should be noted that an implementation principle of S702 is the same as the implementation principle of S602. Therefore, for an implementation process of S702 and related description, refer to the foregoing S602. Details are not described herein again.

S703: The out-of-band controller sends a first configuration modification command corresponding to the NCSI parameter configuration information to the network interface card.

The first configuration modification command is used to instruct to modify the MAC address of the out-of-band controller that is recorded by the network interface card to the actual MAC address of the out-of-band controller.

Optionally, the out-of-band controller stores a fourth correspondence between NCSI parameter configuration information and the first configuration modification command.

The fourth correspondence indicates that a repair command that needs to be used when the NCSI parameter configuration information indicates that the communication status is abnormal is the first configuration modification command, that is, indicates to use the first configuration modification command when the MAC address indicated by the NCSI parameter configuration information is abnormal.

In some embodiments, when determining that the NCSI parameter configuration information indicates that the communication status is abnormal, the out-of-band controller sends the first configuration modification command to the network interface card based on the fourth correspondence, so as to modify the MAC address of the out-of-band controller that is recorded by the network interface card to the actual MAC address of the out-of-band controller.

It should be noted that an implementation principle of S703 is the same as the implementation principle of S303. Therefore, for an implementation process of S703 and related description, refer to the foregoing S303. Details are not described herein again.

S704: The network interface card receives the Enable Channel command corresponding to the NCSI parameter configuration information that is sent by the out-of-band controller.

It should be noted that an implementation principle of S704 is the same as the implementation principle of S304. Therefore, for an implementation process of S704 and related description, refer to the foregoing S304. Details are not described herein again.

S705: The network interface card executes the Enable Channel command to restore the communication status to normal.

It should be noted that an implementation principle of S705 is the same as the implementation principle of S305. Therefore, for an implementation process of S705 and related description, refer to the foregoing S305. Details are not described herein again.

S706: Refer to S306.

In the foregoing embodiment, the out-of-band controller actively obtains the NCSI parameter configuration information that can indicate the status of communication between the out-of-band controller and the external network, where the NCSI parameter configuration information indicates the MAC address of the out-of-band controller that is recorded by the network interface card, so as to actively monitor whether the status of communication between the out-of-band controller and the external network is abnormal. If the NCSI parameter configuration information indicates that the communication status is abnormal, the out-of-band controller sends the first configuration modification command corresponding to the NCSI parameter configuration information to the network interface card, and instructs the network interface card to modify the MAC address of the out-of-band controller that is recorded by the network interface card to the actual MAC address of the out-of-band controller, to restore the communication status to normal. The out-of-band controller can actively monitor whether the communication status is abnormal, and actively send, to the network interface card when the communication status is abnormal, the first configuration modification command used to repair the communication status abnormality, so as to automatically restore the communication status to normal. In this way, there is no need to manually repair the communication abnormality between the out-of-band controller and the external network, which helps reduce manual costs and shorten a recovery period.

In addition, the abnormality cause of the communication status abnormality indicated by the NCSI parameter configuration information is the MAC address abnormality, and the first configuration modification command can instruct the network interface card to modify the MAC address of the out-of-band controller that is recorded by the network interface card to the actual MAC address of the out-of-band controller. Therefore, when it is determined that the NCSI parameter configuration information indicates that the communication status is abnormal, the first configuration modification command is sent to the network interface card. This improves a degree of matching between the first configuration modification command used to repair the communication status abnormality and the abnormality cause (that is, the MAC address abnormality) of the communication status abnormality. In this way, accuracy and reliability of using the first configuration modification command to repair the communication status abnormality are ensured, thereby ensuring that the abnormality cause of the communication status abnormality is eliminated, and the communication status is restored to normal.

The foregoing describes the implementation process of the fifth part of the embodiments of this application. The following is the sixth part of the embodiments of this application, and describes, with reference to FIG. 8, a process in which the out-of-band controller monitors and repairs the communication status abnormality between the out-of-band controller and the external network when the target parameter in the first part includes NCSI parameter configuration information, and the NCSI parameter configuration information includes a VLAN identifier recorded by the network interface card.

FIG. 8 is a flowchart of a communication fault handling method according to an example of an embodiment. In an example, the method includes S801 to S805.

S801: An out-of-band controller obtains NCSI parameter configuration information of a target network interface of a network interface card.

The NCSI parameter configuration information indicates a virtual local area network VLAN identifier of the out-of-band controller that is recorded by the network interface card.

It should be noted that an implementation principle of S801 is the same as the implementation principle of S701. Therefore, for an implementation process of S801 and related description, refer to the foregoing S701. Details are not described herein again.

S802: The out-of-band controller determines whether a communication status indicated by the NCSI parameter configuration information is abnormal.

If a determining result is yes, S803 is performed. If the determining result is no, the procedure ends.

In some embodiments, the out-of-band controller stores an actual VLAN identifier, and the actual VLAN identifier is a correct identifier of the out-of-band controller. The out-of-band controller determines whether the VLAN identifier is the same as the actual VLAN identifier of the out-of-band controller, to determine the determining result of S802. If the VLAN identifier is different from the actual VLAN identifier of the out-of-band controller, the determining result of S802 is yes. If the VLAN identifier is the same as the second MVLAN identifier, the determining result of S802 is no.

The actual VLAN identifier of the out-of-band controller is the correct identifier of the out-of-band controller. If the VLAN identifier recorded by the network interface card is different from the actual VLAN identifier of the out-of-band controller, it indicates that the VLAN identifier recorded by the network interface card is incorrect. When a data packet filtering function is enabled, the network interface card verifies a receive end VLAN identifier (that is, the actual VLAN identifier of the out-of-band controller) recorded in a data packet, that is, the network interface card verifies whether the VLAN identifier in the data packet is the same as the VLAN identifier of the out-of-band controller that is recorded by the network interface card. If the VLAN identifier recorded by the network interface card is incorrect, a verification result may be that the VLAN identifier in the data packet is different from the VLAN identifier recorded by the network interface card, and the network interface card filters out the data packet and does not send the data packet to the out-of-band controller. Therefore, if the VLAN identifier is different from the actual VLAN identifier of the out-of-band controller, the NCSI parameter configuration information is abnormal, and the NCSI parameter configuration information indicates that the communication status is abnormal. Otherwise, the NCSI parameter configuration information indicates that the communication status is normal.

Optionally, if the determining result is yes, the out-of-band controller records an abnormality cause of the communication status abnormality as a VLAN identifier abnormality. The abnormality cause of the communication status abnormality is determined, and may be used to subsequently determine a proper repair command for the communication abnormality. In this way, a degree of matching between the target command for repairing the communication status abnormality and the direct cause of the communication status abnormality is improved, thereby improving a success rate of the target command and improving reliability of using the target command to repair the communication status abnormality.

It should be noted that an implementation principle of S802 is the same as the implementation principle of S702. Therefore, for an implementation process of S802 and related description, refer to the foregoing S702. Details are not described herein again.

S803: The out-of-band controller sends a second configuration modification command corresponding to the NCSI parameter configuration information to the network interface card.

The second configuration modification command is used to instruct to modify the VLAN identifier of the out-of-band controller that is recorded by the network interface card to the actual VLAN identifier of the out-of-band controller.

Optionally, the out-of-band controller stores a fifth correspondence between NCSI parameter configuration information and the second configuration modification command.

The fifth correspondence indicates that a repair command that needs to be used when the NCSI parameter configuration information indicates that the communication status is abnormal is the second configuration modification command, that is, indicates to use the second configuration modification command when the VLAN identifier indicated by the NCSI parameter configuration information is abnormal.

In some embodiments, when determining that the NCSI parameter configuration information indicates that the communication status is abnormal, the out-of-band controller sends the second configuration modification command to the network interface card based on the fifth correspondence, so as to modify the VLAN identifier of the out-of-band controller that is recorded by the network interface card to the actual VLAN identifier of the out-of-band controller.

It should be noted that an implementation principle of S803 is the same as the implementation principle of S703. Therefore, for an implementation process of S803 and related description, refer to the foregoing S703. Details are not described herein again.

S804: The network interface card receives the Enable Channel command sent by the out-of-band controller.

It should be noted that an implementation principle of S804 is the same as the implementation principle of S304. Therefore, for an implementation process of S804 and related description, refer to the foregoing S304. Details are not described herein again.

S805: The network interface card executes the Enable Channel command to restore the communication status to normal.

It should be noted that an implementation principle of S805 is the same as the implementation principle of S305. Therefore, for an implementation process of S805 and related description, refer to the foregoing S305. Details are not described herein again.

S806: Refer to S306.

In the foregoing embodiment, the out-of-band controller actively obtains the NCSI parameter configuration information that can indicate the status of communication between the out-of-band controller and the external network, where the NCSI parameter configuration information indicates the VLAN identifier of the out-of-band controller that is recorded by the network interface card, so as to actively monitor whether the status of communication between the out-of-band controller and the external network is abnormal. If the NCSI parameter configuration information indicates that the communication status is abnormal, the out-of-band controller sends the second configuration modification command corresponding to the NCSI parameter configuration information to the network interface card, and instructs the network interface card to modify the VLAN identifier of the out-of-band controller that is recorded by the network interface card to the actual VLAN identifier of the out-of-band controller, to restore the communication status to normal. The out-of-band controller can actively monitor the status of communication between the out-of-band controller and the external network, and actively send, to the network interface card when the communication status is abnormal, the second configuration modification command used to repair the communication status abnormality, so as to automatically restore the communication status to normal. In this way, there is no need to manually repair the communication abnormality between the out-of-band controller and the external network, which helps reduce manual costs and shorten a recovery period.

In addition, the abnormality cause of the communication status abnormality indicated by the NCSI parameter configuration information is the VLAN identifier abnormality, and the second configuration modification command can instruct the network interface card to modify the VLAN identifier of the out-of-band controller that is recorded by the network interface card to the actual VLAN identifier of the out-of-band controller. Therefore, when it is determined that the NCSI parameter configuration information indicates that the communication status is abnormal, the second configuration modification command is sent to the network interface card. This improves a degree of matching between the second configuration modification command used to repair the communication status abnormality and the abnormality cause (that is, the VLAN identifier abnormality) of the communication status abnormality. In this way, accuracy and reliability of using the second configuration modification command to repair the communication status abnormality are ensured, thereby ensuring that the abnormality cause of the communication status abnormality is eliminated, and the communication status is restored to normal.

The foregoing mainly describes the solutions provided in the embodiments of this application from the perspective of the method. To implement the foregoing functions, the communication fault handling apparatus includes a hardware structure and/or a software module for executing corresponding functions. A person of ordinary skill in the art should be easily aware that, in combination with the examples described in the embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication fault handling apparatus may be divided into functional modules as examples according to the foregoing method. For example, the communication fault handling apparatus may include functional modules obtained through division based on different functions, or two or more functions may be integrated into one processing module. The foregoing integrated module may be implemented in a form of hardware, or may be implemented in a form of a software functional module. It should be noted that module division in embodiments of this application is an example, and is merely logical function division. In an actual implementation, there may be another division manner.

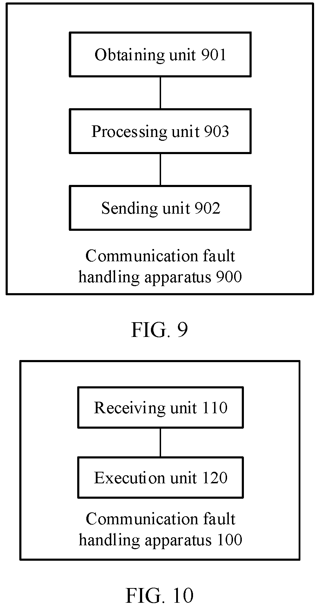

For example, FIG. 9 shows a schematic diagram of a possible structure of the communication fault handling apparatus (denoted as a communication fault handling apparatus 900) in the foregoing embodiment. The communication fault handling apparatus 900 includes an obtaining unit 901 and a sending unit 902. The obtaining unit 901 is configured to obtain a target parameter of a target network interface of a network interface card, where the target network interface is configured to transmit a data packet between an out-of-band controller and an external network, and the target parameter is a parameter that indicates a status of communication between the out-of-band controller and the external network. For example, refer to S301 shown in FIG. 3, S401 shown in FIG. 4, S501 shown in FIG. 5, S601 shown in FIG. 6, S701 shown in FIG. 7, and S801 shown in FIG. 8. The sending unit 902 is configured to: if the target parameter indicates that the communication status is abnormal, send a target command corresponding to the target parameter to the network interface card. The target command is used to instruct the network interface card to execute the target command, to restore the communication status to normal. For example, refer to S302 and S303 shown in FIG. 3, S402 and S403 shown in FIG. 4, S502 and S503 shown in FIG. 5, S602 and S603 shown in FIG. 6, S702 and S703 shown in FIG. 7, and S802 and S803 shown in FIG. 8.

Optionally, the target parameter includes a link status parameter of the target network interface, and the apparatus further includes a processing unit 903. The processing unit 903 is configured to: if a network controller sideband interface NCSI link status that is between the target network interface and the external network and that is indicated by the link status parameter is an abnormal state, determine that the link status parameter indicates that the communication status is abnormal.

Optionally, the out-of-band controller stores a correspondence between a link status parameter and a network interface card initialization command. The sending unit 902 is specifically configured to: if the link status parameter indicates that the communication status is abnormal, send the network interface card initialization command to the network interface card based on the correspondence, where the network interface card initialization command is used to instruct to set the NCSI link status to a predefined NCSI link state, and the predefined NCSI link state is a normal state.

Optionally, the network interface card initialization command includes at least one of a Select Package command, a Clear Initial State command, an Enable Channel command, a Disable Channel Network TX command, an Enable Channel Network TX command, an Enable Broadcast Filter command, a Disable Global Multicast Filter command, a Set VLAN Filter command, an Enable VLAN command, and a Disable VLAN command.

Optionally, the target parameter includes NCSI parameter configuration information, and the processing unit 903 is further configured to: if the target network interface is an NCSI transmit network interface, and the NCSI parameter configuration information indicates that an NCSI transmit function of the target network interface is not enabled, determine that the NCSI parameter configuration information indicates that the communication status is abnormal; or if the target network interface is an NCSI non-transmit network interface, and the NCSI parameter configuration information indicates that an NCSI transmit function of the target network interface is enabled, determine that the NCSI parameter configuration information indicates that the communication status is abnormal.

Optionally, if the target network interface is the NCSI transmit network interface, the sending unit 902 is specifically configured to: if the NCSI parameter configuration information indicates that the communication status is abnormal, send an Enable Channel command to the network interface card, where the Enable Channel command is used to instruct to enable the NCSI transmit function of the target network interface, so as to enable the target network interface to send a data packet between the out-of-band controller and the external network; or if the target network interface is the NCSI non-transmit network interface, the sending unit 902 is specifically configured to: if the NCSI parameter configuration information indicates that the communication status is abnormal, send a Disable Channel command to the network interface card, where the Disable Channel command is used to instruct to disable the NCSI transmit function of the target network interface, so as to prevent the target network interface from sending a data packet between the out-of-band controller and the external network.

Optionally, the target parameter includes NCSI parameter configuration information, and the NCSI parameter configuration information further includes a target identifier of the out-of-band controller that is recorded by the network interface card. The target identifier includes a media access control MAC address or a virtual local area network VLAN identifier. The processing unit 903 is further configured to: if the MAC address is different from an actual MAC address of the out-of-band controller, determine that the communication status indicated by the NCSI parameter configuration information is abnormal; or if the VLAN identifier is different from an actual VLAN identifier of the out-of-band controller, determine that the communication status indicated by the NCSI parameter configuration information is abnormal.

Optionally, if the target identifier includes the MAC address, the sending unit 902 is specifically configured to: if the NCSI parameter configuration information indicates that the communication status is abnormal, send a first configuration modification command to the network interface card, where the first configuration modification command is used to instruct to modify the MAC address of the out-of-band controller that is recorded by the network interface card to the actual MAC address of the out-of-band controller. Alternatively, if the target identifier includes the VLAN identifier, the sending unit 902 is specifically configured to: if the NCSI parameter configuration information indicates that the communication status is abnormal, send a second configuration modification command to the network interface card, where the second configuration modification command is used to instruct to modify the VLAN identifier of the out-of-band controller that is recorded by the network interface card to the actual VLAN identifier of the out-of-band controller.

Optionally, the out-of-band controller stores target link aggregation information between the network interface card and the external network, and the target link aggregation information indicates an NCSI transmit network interface identifier and an NCSI receive network interface identifier of the network interface card. The processing unit 903 is further configured to: when the communication status is restored to normal, send a link aggregation command to the network interface card if a link aggregation function of the network interface card is enabled, and content indicated by current link aggregation information of the network interface card is different from content indicated by the target link aggregation information. The link aggregation command is used to instruct to set a network interface indicated by the NCSI transmit network interface identifier as an NCSI transmit network interface of the network interface card, and set a network interface indicated by the NCSI receive network interface identifier as an NCSI receive network interface of the network interface card, and the NCSI transmit network interface of the network interface card or the NCSI receive network interface of the network interface card is the target network interface.

For specific description of the foregoing optional manner, refer to the foregoing method embodiment. Details are not described herein again. In addition, for description of any communication fault handling apparatus 900 provided above and beneficial effects, refer to the foregoing corresponding method embodiment. Details are not described again.

For example, FIG. 10 shows a schematic diagram of a possible structure of the communication fault handling apparatus (denoted as a communication fault handling apparatus 100) in the foregoing embodiment. The communication fault handling apparatus 100 includes a receiving unit 110 and an execution unit 120. The receiving unit 110 is configured to receive a target command that is sent by an out-of-band controller and corresponding to a target parameter of a target network interface of a network interface card, where the target network interface is configured to transmit a data packet between the out-of-band controller and an external network, the target parameter is a parameter indicating a status of communication between the out-of-band controller and the external network, and the target command is sent when the out-of-band controller determines, based on the target parameter of the target network interface, that the status of communication between the out-of-band controller and the external network is abnormal. For example, refer to S304 shown in FIG. 3, S404 shown in FIG. 4, S504 shown in FIG. 5, S604 shown in FIG. 6, S704 shown in FIG. 7, and S804 shown in FIG. 8. The execution unit 120 is configured to execute the target command to restore the communication status to normal. For example, refer to S305 shown in FIG. 3, S405 shown in FIG. 4, S505 shown in FIG. 5, S605 shown in FIG. 6, S705 shown in FIG. 7, and S805 shown in FIG. 8.

Optionally, the target parameter includes a link status parameter, the target command includes a network interface card initialization command, the network interface card initialization command is used to instruct to set an NCSI link status indicated by the link status parameter to a predefined NCSI link state, and the predefined NCSI link state is a normal state.

Optionally, the target parameter includes NCSI parameter configuration information. If the target network interface is an NCSI transmit network interface, the target command includes an Enable Channel command, where the Enable Channel command is used to instruct to enable an NCSI transmit function of the target network interface, so as to enable the target network interface to transmit a data packet between the out-of-band controller and the external network.

Optionally, the target parameter includes NCSI parameter configuration information. If the target network interface is an NCSI non-transmit network interface, the target command includes a Disable Channel command, where the Disable Channel command is used to instruct to disable an NCSI transmit function of the target network interface, so as to prevent the target network interface from transmitting a data packet between the out-of-band controller and the external network.

Optionally, the target parameter includes NCSI parameter configuration information, the NCSI parameter configuration information includes a MAC address of the out-of-band controller that is recorded by the network interface card, and the target command includes a first configuration modification command, where the first configuration modification command is used to instruct to modify the MAC address of the out-of-band controller that is recorded by the network interface card to an actual MAC address of the out-of-band controller.

Optionally, the target parameter includes NCSI parameter configuration information, the NCSI parameter configuration information further includes a virtual local area network VLAN identifier of the out-of-band controller that is recorded by the network interface card, and the target command includes a second configuration modification command, where the second configuration modification command is used to instruct to modify the virtual local area network VLAN identifier of the out-of-band controller that is recorded by the network interface card to an actual VLAN identifier of the out-of-band controller.

Optionally, the execution unit 120 is further configured to send target information to the out-of-band controller in response to a performed target operation that has taken effect, where the target information is used to instruct to determine the status of communication between the out-of-band controller and the external network. The target operation includes any one of restart, upgrade, downgrade, and configuration modification.

For specific description of the foregoing optional manner, refer to the foregoing method embodiment. Details are not described herein again. In addition, for description of any communication fault handling apparatus 100 provided above and beneficial effects, refer to the foregoing corresponding method embodiment. Details are not described again.

An embodiment of this application further provides a computer device. The computer device includes a processor and a memory. The processor is connected to the memory. The memory stores computer executable instructions. When executing the computer executable instructions, the processor implements the data processing method in the foregoing embodiment. A specific form of the computer device is not limited in this embodiment of this application. For example, the computer device may be specifically a terminal apparatus, or may be a network device. The terminal apparatus may be referred to as a terminal, user equipment (user equipment, UE), a terminal device, an access terminal, a subscriber unit, a subscriber station, a mobile station, a remote station, a remote terminal, a mobile device, a user terminal, a wireless communication device, a user agent, a user apparatus, or the like. The terminal apparatus may be specifically a mobile phone, an augmented reality (augmented reality, AR) device, a virtual reality (virtual reality, VR) device, a tablet computer, a notebook computer, an ultra-mobile personal computer (ultra-mobile personal computer, UMPC), a netbook, a personal digital assistant (personal digital assistant, PDA), or the like. The network device may be specifically a server or the like. The server may be a physical or logical server, or may be two or more physical or logical servers that share different responsibilities and cooperate with each other to implement various functions of the server.

An embodiment of this application further provides a computer-readable storage medium. The computer-readable storage medium stores a computer program. When the computer program is run on a computer, the computer is enabled to perform the method performed by any computer device provided above.

For descriptions of related content and beneficial effects in any computer-readable storage medium provided above, refer to the foregoing corresponding embodiments. Details are not described herein again.

An embodiment of this application further provides a chip. A control circuit configured to implement functions of the foregoing computer device and one or more ports are integrated into the chip. Optionally, for a function supported by the chip, refer to the foregoing descriptions. Details are not described herein again. A person of ordinary skill in the art may understand that all or some of the steps of the foregoing embodiments may be implemented by a program instructing relevant hardware. The program may be stored in a computer-readable storage medium. The storage medium mentioned above may be a read-only memory, a random access memory, or the like. The processing unit or the processor may be a central processing unit, a general-purpose processor, an application-specific integrated circuit (application specific integrated circuit, ASIC), a digital signal processor (digital signal processor, DSP), a field programmable gate array (field programmable gate array, FPGA) or another programmable logic device, a transistor logic device, a hardware component, or any combination thereof.

An embodiment of this application further provides a computer program product that includes instructions. When the instructions are run on a computer, the computer is enabled to perform any method in the foregoing embodiments. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, wireless, or microwave) manner. The computer-readable storage medium may be any available medium accessible by the computer or a data storage device that includes one or more available media, for example, a server or a data center. The available medium may be a magnetic medium (for example, a floppy disk, a hard disk, or a magnetic tape), an optical medium (for example, a DVD), or a semiconductor medium (for example, an SSD).

It should be noted that the foregoing components provided in the embodiments of this application that are configured to store computer instructions or a computer program include but are not limited to the foregoing storage, the computer-readable storage medium, and the communication chip, and are all non-transitory (non-transitory).

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, wireless, or microwave) manner. The computer-readable storage medium may be any available medium accessible by the computer or a data storage device that includes one or more available media, for example, a server or a data center. The available medium may be a magnetic medium (for example, a floppy disk, a hard disk, or a magnetic tape), an optical medium (for example, a DVD), or a semiconductor medium (for example, a solid state disk (solid state disk, SSD)).

Although this application is described with reference to the embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of "a plurality of". A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, this specification and the accompanying drawings are merely example description of this application defined by the appended claims, and are considered as any of or all modifications, variations, combinations or equivalents that cover the scope of this application. Clearly, a person skilled in the art may make various modifications and variations to this application without departing from the spirit and scope of this application. In this way, if these modifications and variations in this application fall within the scope of the claims of this application and the equivalent technologies thereof, this application also intends to include these modifications and variations.

## Claims

1. A communication fault handling method, used for a server, wherein the server comprises a network interface card and an out-of-band controller connected to the network interface card, the method is executed by the out-of-band controller, and the method comprises:
obtaining a target parameter of a target network interface of the network interface card, wherein the target network interface is configured to transmit a data packet between the out-of-band controller and an external network, and the target parameter is a parameter that indicates a status of communication between the out-of-band controller and the external network; and
sending a target command corresponding to the target parameter to the network interface card if the target parameter indicates that the communication status is abnormal, wherein the target command is used to instruct the network interface card to execute the target command, to restore the communication status to normal.

2. The method according to claim 1, wherein the target parameter comprises a link status parameter of the target network interface, and the method further comprises:
if a network controller sideband interface NCSI link status that is between the target network interface and the external network and that is indicated by the link status parameter is an abnormal state, determining that the link status parameter indicates that the communication status is abnormal.

3. The method according to claim 2, wherein the out-of-band controller stores a correspondence between the link status parameter and a network interface card initialization command, and the sending a target command corresponding to the target parameter to the network interface card if the target parameter indicates that the communication status is abnormal comprises:
if the link status parameter indicates that the communication status is abnormal, sending the network interface card initialization command to the network interface card based on the correspondence, wherein the network interface card initialization command is used to instruct to set the NCSI link status to a predefined NCSI link state, and the predefined NCSI link state is a normal state.

4. The method according to claim 3, wherein
the network interface card initialization command comprises at least one of a Select Package command, a Clear Initial State command, an Enable Channel command, a Disable Channel Network TX command, an Enable Channel Network TX command, an Enable Broadcast Filter command, a Disable Global Multicast Filter command, a Set VLAN Filter command, an Enable VLAN command, and a Disable VLAN command.

5. The method according to claim 1, wherein the target parameter comprises NCSI parameter configuration information, and the method further comprises:
if the target network interface is an NCSI transmit network interface, and the NCSI parameter configuration information indicates that an NCSI transmit function of the target network interface is not enabled, determining that the NCSI parameter configuration information indicates that the communication status is abnormal; or
if the target network interface is an NCSI non-transmit network interface, and the NCSI parameter configuration information indicates that an NCSI transmit function of the target network interface is enabled, determining that the NCSI parameter configuration information indicates that the communication status is abnormal.

6. The method according to claim 5, wherein the sending a target command corresponding to the target parameter to the network interface card if the target parameter indicates that the communication status is abnormal comprises:
if the target network interface is the NCSI transmit network interface, and the NCSI parameter configuration information indicates that the communication status is abnormal, sending an Enable Channel command corresponding to the NCSI parameter configuration information to the network interface card, wherein the Enable Channel command is used to instruct to enable the NCSI transmit function of the target network interface, so as to enable the target network interface to send a data packet between the out-of-band controller and the external network; or
if the target network interface is the NCSI non-transmit network interface, and the NCSI parameter configuration information indicates that the communication status is abnormal, sending a Disable Channel command corresponding to the NCSI parameter configuration information to the network interface card, wherein the Disable Channel command is used to instruct to disable the NCSI transmit function of the target network interface, so as to prevent the target network interface from sending a data packet between the out-of-band controller and the external network.

7. The method according to claim 1, wherein the target parameter comprises NCSI parameter configuration information, the NCSI parameter configuration information further comprises a target identifier of the out-of-band controller that is recorded by the network interface card, the target identifier indicates a media access control MAC address or a virtual local area network VLAN identifier, and the method further comprises:
if the MAC address is different from an actual MAC address of the out-of-band controller, determining that the NCSI parameter configuration information indicates that the communication status is abnormal; or
if the VLAN identifier is different from an actual VLAN identifier of the out-of-band controller, determining that the NCSI parameter configuration information indicates that the communication status is abnormal.

8. The method according to claim 7, wherein the sending a target command corresponding to the target parameter to the network interface card if the target parameter indicates that the communication status is abnormal comprises:
if the target identifier indicates the MAC address, and the NCSI parameter configuration information indicates that the communication status is abnormal, sending a first configuration modification command corresponding to the NCSI parameter configuration information to the network interface card, wherein the first configuration modification command is used to instruct to modify the MAC address recorded by the network interface card to the actual MAC address of the out-of-band controller; or
if the target identifier indicates the VLAN identifier, and the NCSI parameter configuration information indicates that the communication status is abnormal, sending a second configuration modification command corresponding to the NCSI parameter configuration information to the network interface card, wherein the second configuration modification command is used to instruct to modify the VLAN identifier recorded by the network interface card to the actual VLAN identifier of the out-of-band controller.

9. The method according to any one of claims 1 to 8, wherein the out-of-band controller stores target link aggregation information between the network interface card and the external network, the target link aggregation information indicates an NCSI transmit network interface identifier and an NCSI receive network interface identifier of the network interface card, and the method further comprises:
when the communication status is restored to normal, sending a link aggregation command to the network interface card if a link aggregation function of the network interface card is enabled, and content indicated by current link aggregation information of the network interface card is different from content indicated by the target link aggregation information, wherein
the link aggregation command is used to instruct to set a network interface indicated by the NCSI transmit network interface identifier as an NCSI transmit network interface of the network interface card, and set a network interface indicated by the NCSI receive network interface identifier as an NCSI receive network interface of the network interface card, and the NCSI transmit network interface of the network interface card or the NCSI receive network interface of the network interface card is the target network interface.

10. A communication fault handling method, used for a server, wherein the server comprises a network interface card and an out-of-band controller connected to the network interface card, the method is executed by the network interface card, and the method comprises:
receiving a target command that is sent by the out-of-band controller and corresponding to a target parameter of a target network interface of the network interface card, wherein the target network interface is configured to transmit a data packet between the out-of-band controller and an external network, the target parameter is a parameter indicating a status of communication between the out-of-band controller and the external network, and the target command is sent when the out-of-band controller determines, based on the target parameter of the target network interface, that the status of communication between the out-of-band controller and the external network is abnormal; and
executing the target command to restore the communication status to normal.

11. The method according to claim 10, wherein
the target parameter comprises a link status parameter, the target command comprises a network interface card initialization command, the network interface card initialization command is used to instruct to set an NCSI link status indicated by the link status parameter to a predefined NCSI link state, and the predefined NCSI link state is a normal state; or
the target parameter comprises NCSI parameter configuration information, and if the target network interface is an NCSI transmit network interface, the target command comprises an Enable Channel command, wherein the Enable Channel command is used to instruct to enable an NCSI transmit function of the target network interface, so as to enable the target network interface to transmit a data packet between the out-of-band controller and the external network; or
the target parameter comprises NCSI parameter configuration information, and if the target network interface is an NCSI non-transmit network interface, the target command comprises a Disable Channel command, wherein the Disable Channel command is used to instruct to disable an NCSI transmit function of the target network interface, so as to prevent the target network interface from transmitting a data packet between the out-of-band controller and the external network; or
the target parameter comprises NCSI parameter configuration information, the NCSI parameter configuration information comprises a MAC address of the out-of-band controller that is recorded by the network interface card, and the target command comprises a first configuration modification command, wherein the first configuration modification command is used to instruct to modify the MAC address recorded by the network interface card to an actual MAC address of the out-of-band controller; or
the target parameter comprises NCSI parameter configuration information, the NCSI parameter configuration information further comprises a virtual local area network VLAN identifier of the out-of-band controller that is recorded by the network interface card, and the target command comprises a second configuration modification command, wherein the second configuration modification command is used to instruct to modify the VLAN identifier recorded by the network interface card to an actual VLAN identifier of the out-of-band controller.

12. The method according to claim 10 or 11, wherein the method further comprises:
sending target information to the out-of-band controller in response to a performed target operation that has taken effect, wherein the target information is used to instruct to determine the status of communication between the out-of-band controller and the external network, and the target operation comprises any one of restarting a firmware program of the network interface card, upgrading the firmware program of the network interface card, downgrading the firmware program of the network interface card, and modifying a configuration of the firmware program of the network interface card.

13. A communication fault handling system, comprising:
a network interface card and an out-of-band controller connected to the network interface card, wherein a target network interface of the network interface card is configured to transmit a data packet between the out-of-band controller and an external network, and
the out-of-band controller is configured to execute the method according to any one of claims 1 to 9, and the network interface card is configured to execute the method according to any one of claims 10 to 12.

14. A computer device, comprising a processor, wherein
the processor is connected to a memory, the memory is configured to store computer-executable instructions, and the processor executes the computer-executable instructions stored in the memory, to enable the computer device to implement the method according to any one of claims 1 to 9, or implement the method according to any one of claims 10 to 12.

15. A computer-readable storage medium, configured to store computer instructions, wherein when the computer instructions run on a computer, the computer performs the method according to any one of claims 1 to 9 or performs the method according to any one of claims 10 to 12.
